(19) Europäisches Patentamt
European Patent Office
Office européen des brevets

(11) EP 2 514 791 A1

(12) EUROPEAN PATENT APPLICATION
published in accordance with Art. 153(4) EPC

(43) Date of publication:
**24.10.2012 Bulletin 2012/43**

(21) Application number: **10837528.8**

(22) Date of filing: **10.12.2010**

(51) Int Cl.:
*C09B 69/10* (2006.01) *C09B 1/32* (2006.01)
*C09B 1/514* (2006.01) *G02C 7/00* (2006.01)
*G02C 7/04* (2006.01)

(86) International application number:
**PCT/JP2010/072289**

(87) International publication number:
**WO 2011/074501 (23.06.2011 Gazette 2011/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2009 JP 2009286985**

(71) Applicant: **Menicon Co., Ltd.**
**Nagoya-shi**
**Aichi 460-0006 (JP)**

(72) Inventors:
- **SUTOU, Daisuke**
**Kasugai-shi**
**Aichi 487-0032 (JP)**
- **WATANABE, Tsuyoshi**
**Kasugai-shi**
**Aichi 487-0032 (JP)**
- **OKI, Toshio**
**Kasugai-shi**
**Aichi 487-0032 (JP)**

(74) Representative: **Maxton Langmaack & Partner**
**Patentanwälte**
**Postfach 51 08 06**
**D-50944 Köln (DE)**

# (54) ANTHRAQUINONE PIGMENT, OCULAR LENS MATERIAL USING SAME, OCULAR LENS MATERIAL MANUFACTURING METHOD, AND OCULAR LENS

(57) Provided by the present invention are an anthraquinone colorant for coloring an ophthalmic lens represented by the following general formula (1):

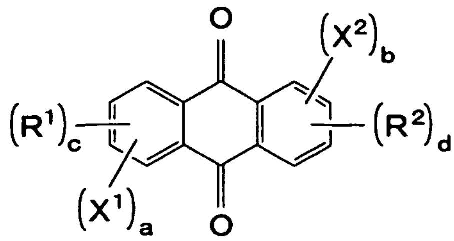

(1)

and a high molecular anthraquinone colorant obtained by forming a covalent bond between the anthraquinone colorant and a monomer for an ophthalmic lens. The monomer for an ophthalmic lens preferably has a polydimethylsiloxane structure. Further provided by the present invention is an ophthalmic lens material formed from a composition containing the colorant and a monomer for an ophthalmic lens having an unsaturated double bond, and the lens material containing a polymer comprising the monomer for an ophthalmic lens as a monomer unit.

EP 2 514 791 A1

## Description

[TECHNICAL FIELD]

The present invention relates to an anthraquinone colorant for an ophthalmic lens, which is suitably used for coloring ophthalmic lenses such as contact lens and artificial cornea, and an ophthalmic lens material and a method for producing an ophthalmic lens in which the same is used, and an ophthalmic lens.

[BACKGROUND ART]

Conventionally, in attempts of coloring of various types of articles during they are still at the stage of raw materials, a colorant having high affinity to a material to be colored such as polymerizable colorants has been developed. In particular, in the case of ophthalmic lenses such as contact lenses and intraocular lenses, a method of coloring during the ophthalmic lens is still at the stage of raw material is effective which includes enhancing affinity of a colorant to an ophthalmic lens material by homogenously mixing a high molecular colorant obtained from a polymerizable colorant with a certain monomer component, etc, for the ophthalmic lens, or copolymerizing a certain monomer component for the ophthalmic lens with a polymerizable colorant. Ophthalmic lenses produced using thus colored ophthalmic lens material are uniformly colored, with less decolorization and color change resulting from elution and the like of the colorant, and are superior in durability against light as well as chemical agents.

Accordingly, in an attempt to color ophthalmic lenses during they are still at the stage of raw material, polymerizable or nonpolymerizable high molecular colorants and coloring methods using the same have been specifically developed. For example, Japanese Unexamined Patent Application, Publication No. H8-194191 discloses a reactive colorant capable of forming a covalent bond with a hydroxyl group, etc., in a monomer or polymer of a contact lens substrate. According to this technique, a contact lens material containing this reactive colorant is immersed in an aqueous solution containing a cation compound to allow a chemical bond to be formed between the reactive colorant and a lens substrate, thereby permitting the reactive colorant to fix to the contact lens substrate. However, this technique is disadvantageous in that the degree of coloring may vary depending on the amount of the monomer having a functional group such as a hydroxyl group blended in the contact lens substrate, and the amount of the reactive colorant blended, thus leading to varying elution resistance of the colorant depending on the composition of the contact lens.

In addition, Japanese Unexamined Patent Application (Translation of PCT Application), Publication No. 2007-505171, Japanese Unexamined Patent Application, Publication No. 2003-84242 and the like disclose a method of synthesizing polydimethylsiloxane having a yellow colorant moiety and a polymerizable group, as a high molecular colorant for use in yellow-coloring of an ophthalmic lens. However, the method of synthesizing a high molecular colorant merely enables only a yellow colorant to be prepared, and thus applications of the colorant are restricted. This disadvantage is believed to result from use of an azo colorant as a main colorant material. Therefore, when introduction of a high molecular colorant having absorption in a longer wavelength region such as a blue to green colorant is intended according to the method, the molecular skeleton is enlarged upon addition to a monomer compound to decrease the miscibility with the monomer to be copolymerized, and thus disadvantages may occur such as failure in appropriate progress of copolymerization with a monomer to be copolymerized. Moreover, according to the high molecular colorant, occurrence of disadvantages such as production of the difference between hues of the colorant itself and a matter colored with the colorant, etc., due to the structure of the azo colorant may be conceived.

[PRIOR ART DOCUMENTS]

[PATENT DOCUMENTS]

Patent Document 1: Japanese Unexamined Patent Application, Publication No. H8-194191
Patent Document 2: Japanese Unexamined Patent Application (Translation of PCT Application), Publication No. 2007-505171
Patent Document 3: Japanese Unexamined Patent Application, Publication No. 2003-84242

[SUMMARY OF THE INVENTION]

[PROBLEMS TO BE SOLVED BY THE INVENTION]

The present invention was made in view of the foregoing disadvantages, and an object of the invention is to

provide an anthraquinone colorant having a hue of red - purple - blue - green, and having high solubility in monomers for ophthalmic lenses and superior elution resistance from ophthalmic lenses, with a small difference between the pre- and post-coloring hues. Also provided are an ophthalmic lens material, a method for producing an ophthalmic lens material in which the anthraquinone colorant is used, and an ophthalmic lens.

[MEANS FOR SOLVING THE PROBLEMS]

An aspect of the present invention made for solving the foregoing problems is directed to an anthraquinone colorant for coloring an ophthalmic lens, the anthraquinone colorant being represented by the following general formula (1):

[chemical formula 1]

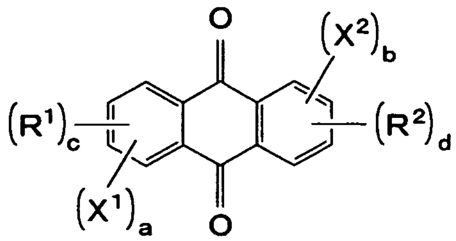

(1)

in the formula (1),

$X^1$ and $X^2$ each independently represent a group represented by the formula of:

[chemical formula 2]

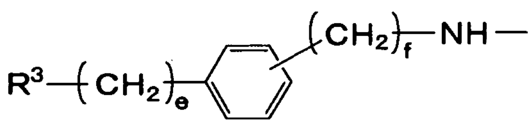

$R^1$ and $R^2$ each independently represent $-NH_2$, -OH, $-SO_3H$, $-NO_2$, -F, - Cl, -Br, -I, a Cl to C4 lower alkyl group, a Cl to C4 lower alkylamino group, a Cl to C4 lower alkoxy group, a Cl to C4 lower alkylamide group, or a group represented by the formula of:

[chemical formula 3]

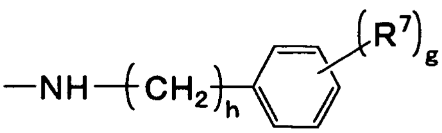

, or

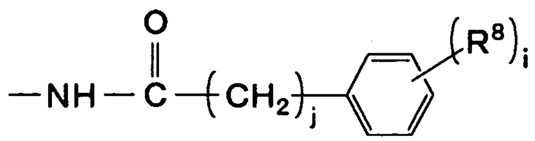

$R^3$ each independently represents a group represented by:

[chemical formula 4]

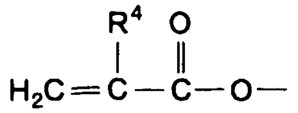 , 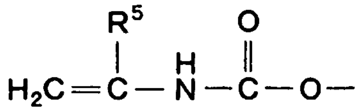 ,

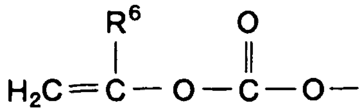 , 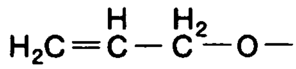 ,

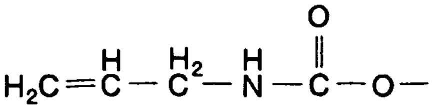 , 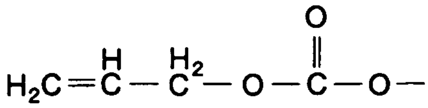 ,

or

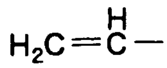

$R^4$, $R^5$ and $R^6$ each independently represent -H or -$CH_3$; $R^7$ and $R^8$ each independently represent -H, -$NH_2$, -OH, -$SO_3H$, -$NO_2$, -F, -Cl, -Br, -I, a Cl to C4 lower alkyl group, a Cl to C4 lower alkylamino group, a Cl to C4 lower alkoxy group or a Cl to C4 lower alkylamide group; a is 1 or 2; b is an integer of 0 to 2; c is an integer of 0 to 3; d is an integer of 0 to 4; wherein, a, b, c and d satisfy the relational expression of: $a + c \leq 4$, $b + d \leq 4$; e and f are each independently an integer of 0 to 4; g and i are each independently an integer of 0 to 5; and h and j are each independently an integer of 0 to 4.

The anthraquinone colorant, can be chemically bound to a monomer having an unsaturated double bond since the colorant itself has a certain polymerizable group. Therefore, according to the anthraquinone colorant, even if the resultant colored lens is boiled or immersed in water or an organic solvent, the colorant is not eluted from the lens, and thus decoloring, generally referred to, of the lens can be prevented. In addition, since the anthraquinone colorant can be thus chemically bound to a monomer having an unsaturated double bond, the colored ophthalmic lens is less likely to be deteriorated, thereby enabling durability of the colored ophthalmic lens to be improved.

Furthermore, since the anthraquinone colorant has a certain polymerizable group on an external side of a chromophore of the colorant, the colorant skeleton is unchanged even by an addition reaction such as polymerization. Therefore, since the difference between hues of the colorant itself and an ophthalmic lens colored with the colorant is small, coloring operation such as preparation of the colorant can be facilitated. Additionally, according to the anthraquinone colorant, selection of a substituent enables a colorant corresponding to a red - purple - blue - green hue to be provided.

Another aspect of the present invention which was made in order to solve the aforementioned problems provides a high molecular anthraquinone colorant for coloring an ophthalmic lens obtained through forming a covalent bond between the anthraquinone colorant, and a monomer (I) for an ophthalmic lens.

Since the high molecular anthraquinone colorant has a high molecular weight, strong interaction is achieved in the ophthalmic lens due to an entangling effect and the like with a high molecular chain of the resin constituting the ophthalmic lens. Therefore, according to the high molecular anthraquinone colorant, even if the resultant colored lens is boiled or immersed in water or an organic solvent, the colorant is not eluted from the lens, and thus decoloring, generally referred to, of the lens can be prevented. Also, according to the high molecular anthraquinone colorant, as a result of thus enabling strong binding with a resin and the like constituting the ophthalmic lens, colored matter is less likely to be deteriorated, whereby durability of the colored matter can be improved.

Moreover, according to the high molecular anthraquinone colorant, molecular designing such as incorporation of the monomer component constituting the ophthalmic lens into the high molecular anthraquinone colorant improves the miscibility, and thus the ophthalmic lens can be uniformly and easily colored.

It is preferred that the monomer (I) for an ophthalmic lens has a polydimethylsiloxane structure. By thus incorporating a polydimethylsiloxane structure into the high molecular anthraquinone colorant, miscibility with a composition for an ophthalmic lens material that generally contains a silicone based material is improved, whereby the ophthalmic lens can be uniformly and easily colored.

Furthermore, the high molecular anthraquinone colorant is preferably a polymer of the monomer (I) for an ophthalmic lens and the anthraquinone colorant. Formation of the high molecular anthraquinone colorant by a copolymer with such a monomer having an unsaturated double bond also leads to an entangling effect achieved between a polymer

chain of the colorant and the high molecular chain of the resin constituting the ophthalmic lens. Therefore, the high molecular anthraquinone colorant can be tightly fixed within the ophthalmic lens material.

The monomer (I) for an ophthalmic lens is preferably at least one selected from the group consisting of a (meth) acrylic acid derivative, a styrene derivative, an allyl group-containing compound, a vinyl group-containing compound, and an exo-methylene group-containing compound. When the high molecular anthraquinone colorant is a copolymer with the compound described above, miscibility with the composition for an ophthalmic lens material is further improved, and thus the ophthalmic lens can be uniformly and easily colored.

It is preferred that the high molecular anthraquinone colorant has an unsaturated double bond. Due to the high molecular anthraquinone colorant having an unsaturated double bond, i.e., having a residual unreacted unsaturated double bond, formation of a covalent bond with a monomer for an ophthalmic lens having an unsaturated double bond is enabled. Therefore, according to the high molecular anthraquinone colorant, not only the effect of merely entangling with the ophthalmic lens material but also extremely high bindability can be obtained, due to forming a covalent bond with the monomer for an ophthalmic lens. Therefore, elution resistance of the colorant from the colored ophthalmic lens, and durability can be improved.

Yet another aspect of the present invention which was made for solving the foregoing problems is directed to an ophthalmic lens material which was formed from a composition containing the anthraquinone colorant or high molecular anthraquinone colorant, and a monomer (II) for an ophthalmic lens having an unsaturated double bond, and contains a polymer that includes the monomer (II) for an ophthalmic lens as a monomer unit.

Since the ophthalmic lens material contains the anthraquinone colorant or high molecular anthraquinone colorant, high miscibility with other monomer for an ophthalmic lens and bindability can be achieved, thereby enabling to be uniformly colored, and high elution resistance of the colorant from the ophthalmic lens can be obtained.

The polymer preferably includes a copolymer of the anthraquinone colorant or high molecular anthraquinone colorant with the monomer (II) for an ophthalmic lens. Due to the copolymerization of the anthraquinone colorant or high molecular anthraquinone colorant with the monomer (II) for an ophthalmic lens, i.e., formation of a covalent bond in the ophthalmic lens material, bindability of the colorant into the ophthalmic lens material can be extremely improved. Therefore, the ophthalmic lens material can have extremely high elution resistance of the colorant component.

The monomer (II) for an ophthalmic lens preferably has a polydimethylsiloxane structure. Such a lens material enables the miscibility of the colorant with the monomer to be improved, and also enables bindability between the colorant and the monomer (II) for an ophthalmic lens to be improved, whereby an ophthalmic lens material that is uniformly colored and superior in elution resistance can be provided. In addition, the lens material improves oxygen permeability as a result of preparing a composition of the monomer (II) for an ophthalmic lens having a polydimethylsiloxane structure.

In the monomer (II) for an ophthalmic lens, the polydimethylsiloxane structure and the unsaturated double bond are preferably present via a urethane bond. The ophthalmic lens material can improve elasticity while maintaining the oxygen permeability since the monomer (II) for an ophthalmic lens has the structure described above.

In the ophthalmic lens material, the monomer (II) for an ophthalmic lens is preferably at least one selected from the group consisting of a (meth)acrylic acid derivative, a styrene derivative, an allyl group-containing compound, a vinyl group-containing compound, and an exo-methylene group-containing compound. Such a lens material can also improve the miscibility with the monomer of the colorant; therefore, a uniformly colored ophthalmic lens material can be provided.

It is also preferred that the monomer (II) for an ophthalmic lens is hydrophilic. As a result of providing the monomer (II) for an ophthalmic lens with hydrophilicity, the ophthalmic lens material can have a high water bearing property.

Still another aspect of the present invention which was made for solving the foregoing problems is directed to a method for producing an ophthalmic lens material, the method including the steps of:

(A) preparing a composition for an ophthalmic lens material containing the anthraquinone colorant or high molecular anthraquinone colorant, and the monomer (II) for an ophthalmic lens having an unsaturated double bond;
(B) transferring the composition into a mold;
(C) curing the composition in the mold by irradiating with an ultraviolet ray and/or heating the composition to obtain a cured matter;
(D) releasing the cured matter from the mold;
(E) hydrating the cured matter; and
(F) removing an unreacted material from the cured matter hydrated.

The step (D) is preferably carried out without using a medium, as the cured matter is in a dry state. Since a medium such as a solvent is not used in the method for the production, a step of operation for removing a solvent from the cured matter after the releasing step, etc., is obviated, thereby enabling simplification of the production step to be realized.

The step (E) and the step (F) are preferably carried out concomitantly by immersing the cured matter obtained

in the step (D) in water, a physiological saline solution, a phosphoric acid buffer or a boric acid buffer. According to the method for the production, these two steps can be concomitantly carried out; therefore, simplification of the production step can be realized.

The monomer (II) for an ophthalmic lens in the method for the production preferably has a polydimethylsiloxane structure in light of improvement of oxygen permeability of the resultant ophthalmic lens material, and elution resistance of the colorant. Moreover, in light of the water bearing property of the resultant ophthalmic lens material, the monomer (II) preferably has hydrophilicity.

Furthermore, it is preferred that the method for producing an ophthalmic lens material has a step of (G) modifying the cured matter after the releasing step. By modifyiing the cured matter after the releasing step, the ophthalmic lens material can be higher functions. The step (G) preferably involves the process of: exposing the cured matter under a plasma discharge atmosphere; subjecting the cured matter to surface graft polymerization; or irradiating with an ultraviolet ray or a radioactive ray.

Accordingly, since the colorant contained and other ophthalmic lens component are strongly bound in the ophthalmic lens colored with the anthraquinone colorant or high molecular anthraquinone colorant, even if the ophthalmic lens is boiled or immersed in water or an organic solvent, the colorant is not eluted from the lens itself, and thus decoloring of the lens can be prevented. In addition, the ophthalmic lens is less likely to be deteriorated and is also superior in durability due to potent bindability of the colorant with other material component.

The term "high molecular anthraquinone colorant" as referred to herein means an anthraquinone colorant having a high molecular weight, and not limited to a polymer formed by polymerization of a monomer. It is to be noted that the high molecular weight in the high molecular anthraquinone colorant indicates that the polystyrene equivalent mass average molecular weight is no less than 1,000. Additionally, the monomer for an ophthalmic lens as referred to herein means a compound for a polymerizable ophthalmic lens material, and may have any molecular weight. Also, (meth)acrylic acid refers to acrylic acid and/or methacrylic acid.

[EFFECTS OF THE INVENTION]

As explained in the foregoing, according to the anthraquinone colorant of the present invention and high molecular anthraquinone colorant, since the colorant is not eluted from the lens even if the resultant colored lens is boiled or immersed in water or an organic solvent, decoloring of the lens can be prevented, and high durability can be imparted to the colored lens. In addition, the colorant of the present invention does not result in change of the hue between the colorant itself and the ophthalmic lens colored with the colorant; therefore, handling characteristics in the coloring are improved. Moreover, according to the colorant, selection of a substituent enables a colorant to be provided which corresponds to a hue having an absorption band at a longer wavelength covering red - purple - blue - green, with a small difference between the pre- and post-coloring hues.

Also, according to the material for an ophthalmic lens and the ophthalmic lens of the present invention, superior durability can be achieved without being accompanied by elution of the colorant contained. Furthermore, according to the method for the producing a material for an ophthalmic lens of the present invention, such a material for an ophthalmic lens can be produced.

[BRIEF DESCRIPTION OF THE DRAWINGS]

Fig. 1 shows a view illustrating an infrared absorption spectrum of anthraquinone colorant 1.
Fig. 2 shows a view illustrating an NMR spectrum of the anthraquinone colorant 1.
Fig. 3 shows a view illustrating an infrared absorption spectrum of anthraquinone colorant 2.
Fig. 4 shows a view illustrating an NMR spectrum of the anthraquinone colorant 2.
Fig. 5 shows a view illustrating an infrared absorption spectrum of anthraquinone colorant 3.
Fig. 6 shows a view illustrating an NMR spectrum of the anthraquinone colorant 3.
Fig. 7 shows a view illustrating an infrared absorption spectrum of anthraquinone colorant 4.
Fig. 8 shows a view illustrating an NMR spectrum of the anthraquinone colorant 4.
Fig. 9 shows a view illustrating an infrared absorption spectrum of anthraquinone colorant 5.
Fig. 10 shows a view illustrating an NMR spectrum of the anthraquinone colorant 5.
Fig. 11 shows a view illustrating an infrared absorption spectrum of anthraquinone colorant 6.
Fig. 12 shows a view illustrating an NMR spectrum of the anthraquinone colorant 6.
Fig. 13 shows a view illustrating an infrared absorption spectrum of anthraquinone colorant 7.
Fig. 14 shows a view illustrating an NMR spectrum of the anthraquinone colorant 7.
Fig. 15 shows a view illustrating an infrared absorption spectrum of anthraquinone colorant 8.

Fig. 16 shows a view illustrating an NMR spectrum of the anthraquinone colorant 8.
Fig. 17 shows a view illustrating an infrared absorption spectrum of anthraquinone colorant 9.
Fig. 18 shows a view illustrating an NMR spectrum of the anthraquinone colorant 9.
Fig. 19 shows a view illustrating an infrared absorption spectrum of anthraquinone colorant 10.
Fig. 20 shows a view illustrating an NMR spectrum of the anthraquinone colorant 10.

[DESCRIPTION OF EMBODIMENTS]

Hereinafter, the anthraquinone colorant and the high molecular anthraquinone colorant of the present invention, an ophthalmic lens material in which the same is used, a method for producing an ophthalmic lens material and an ophthalmic lens are explained in detail in this order.

<Anthraquinone Colorant>

The anthraquinone colorant of the present invention is represented by the above general formula (1).
Examples of the Cl to C4 lower alkyl group represented by the $R^1$, $R^2$, $R^4$, $R^5$ and $R^6$ described above include a methyl group, an ethyl group, a propyl group, an isopropyl group, a butyl group, an isobutyl group, a sec-butyl group, and the like.
Examples of the Cl to C4 lower alkylamino group represented by the $R^1$, $R^2$, $R^4$, $R^5$ and $R^6$ described above include a methylamino group, an ethylamino group, a propylamino group, a dimethylamino group, a diethylamino group, and the like.
Examples of the C1 to C4 lower alkoxy group represented by the $R^1$, $R^2$, $R^4$, $R^5$ and $R^6$ described above include a methoxy group, an ethoxy group, a propoxy group, an isopropoxy group, a butoxy group, an isobutoxy group, a sec-butoxy group, and the like.
Examples of the Cl to C4 lower alkylamide group represented by the $R^1$, $R^2$, $R^4$, $R^5$ and $R^6$ described above include a methylamide group, an ethylamide group, a dimethylamide group, and the like.
It is to be noted that the $R^1$, $R^2$, $X^1$ and $X^2$ described above are preferably substituted at position 1, 4, 5 or 8 of the anthraquinone skeleton in light of the structural stability.
In light of minimizing the molecular weight, a, b, c and d satisfy the relational expression of preferably $a + b + c + d \leq 4$, and more preferably $a + b + c + d \leq 2$. Also, "a" and "b" preferably satisfy the relational expression of: $a + b \leq 2$. The molecular weight of the anthraquinone colorant can be further lowered by reducing the number of substituents, and thus the degree of miscibility with the monomer for an ophthalmic lens can be increased.
In addition, "f" is preferably 0 in light of suppression of the change in the pre- and post-hues with respect to the polymerization, and rendering the molecule structure as small as possible.
In general, molecules having a colorant skeleton, for example, diazo colorants that absorb visible light covering longer wavelengths to result in purple - blue - green color formation are less miscible with such a monomer for an ophthalmic lens as described later. However, the anthraquinone colorant of the present invention has a superior degree of miscibility with a monomer for an ophthalmic lens due to having a comparatively low molecular weight, irrespective of having a colorant skeleton that permits red - purple - blue - green color formation, i.e., having an absorption region in a longer waveband. The anthraquinone colorant is miscible with not only highly polar monomers such as N,N-dimethylacrylamide (DMAA) and N-vinylpyrrolidone (N-VP), but also monomers having comparatively low polarity such as methyl methacrylate (MMA) and ethyl methacrylate (EMA). It is to be noted that by appropriately adjusting the type and number of the substituent, the anthraquinone colorant can have a structure having a wavelength of maximum absorption in the range of no less than 500 nm and no greater than 700 nm, whereby color formation of red - purple - blue - green hues is enabled.
Additionally, since the anthraquinone colorant of the present invention is chemically bound to a polymer chain as a result of binding through copolymerization or the like with other monomer for an ophthalmic lens in an ophthalmic lens material, phenomena such as elution outside the lens and color migration can be prevented even if used in coloring a material for a lens. In addition, since the anthraquinone colorant of the present invention has a chemical structure that is similar to general anthraquinone colorants, an ophthalmic lens colored thereby has superior durability such as being less likely to be deteriorated of the colorant by way of an ultraviolet ray. Furthermore, since the anthraquinone colorant is bound to a polymer chain of an ophthalmic lens material not on a particle basis like pigments but on a molecular basis, the ophthalmic lens colored thereby becomes transparent. Still further, the anthraquinone colorant is not accompanied by a change of the colorant skeleton even after the addition reaction such as polymerization since the colorant has a certain polymerizable group on an external side of the chromophore. Therefore, since the difference between hues of the colorant itself and a matter colored with the colorant is small according to the colorant, coloring steps such as preparation of the colorant can be simplified, and thus handling characteristics of the colorant in coloring are improved.
Specific examples of the anthraquinone colorant include the following compounds:

a compound represented by the following formula (2):

[chemical formula 5]

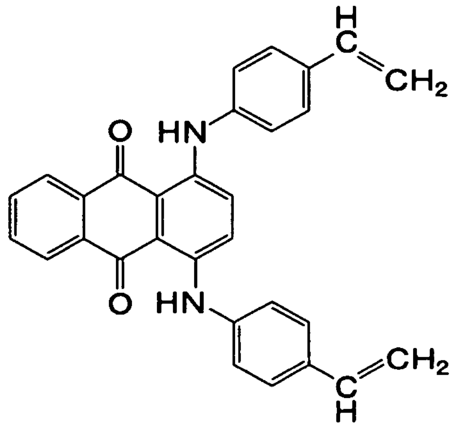

(2)

(hue: green; hereinafter, referred to as "anthraquinone colorant 1"); a compound represented by the following formula (3):

[chemical formula 6]

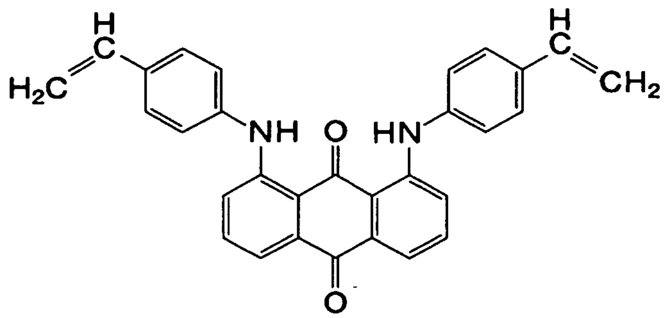

(3)

(hue: reddish purple; hereinafter, referred to as "anthraquinone colorant 2"); a compound represented by the following formula (4):

[chemical formula 7]

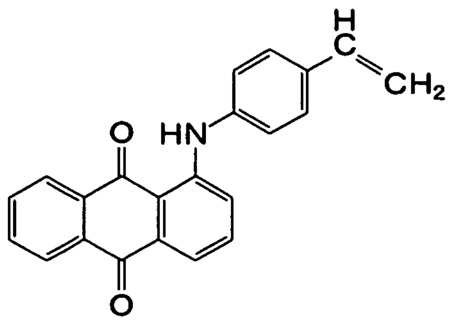

(4)

(hue: red; hereinafter, referred to as "anthraquinone colorant 3"); a compound represented by the following formula (5):

[chemical formula 8]

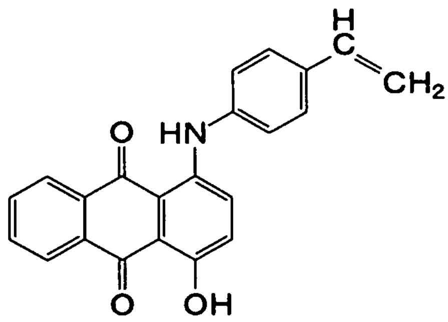

(5)

(hue: purple; hereinafter, referred to as "anthraquinone colorant 4"); a compound represented by the following formula (6):

[chemical formula 9]

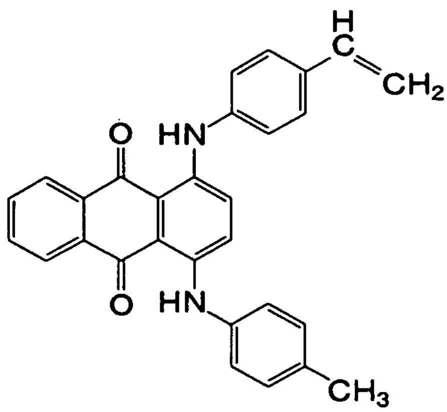

(6)

(hue: green; hereinafter, referred to as "anthraquinone colorant 5"); a compound represented by the following formula (7):

[chemical formula 10]

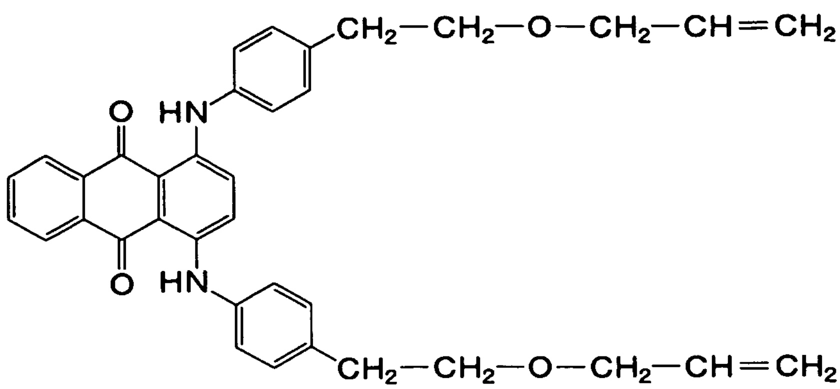

(7)

(hue: green; hereinafter, referred to as "anthraquinone colorant 6"); a compound represented by the following formula (8):

[chemical formula 11]

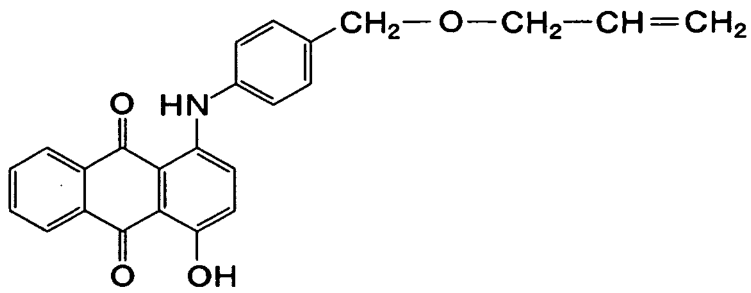

(8)

(hue: purple; hereinafter, referred to as "anthraquinone colorant 7"); a compound represented by the following formula (9):

[chemical formula 12]

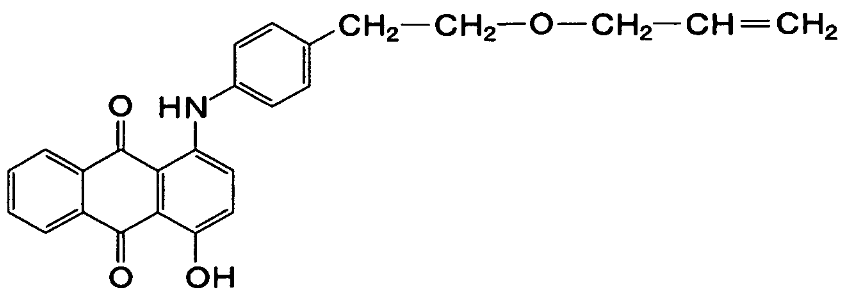

(9)

(hue: purple; hereinafter, referred to as "anthraquinone colorant 8"); a compound represented by the following formula (10):

[chemical formula 13]

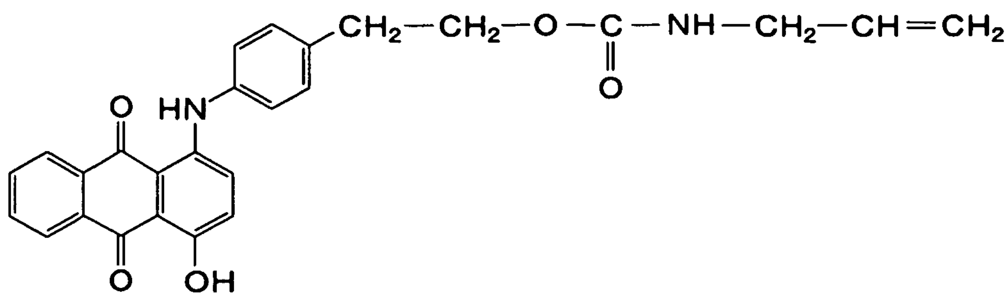

(10)

(hue: purple; hereinafter, referred to as "anthraquinone colorant 9") ; a compound represented by the following formula (11):

[chemical formula 14]

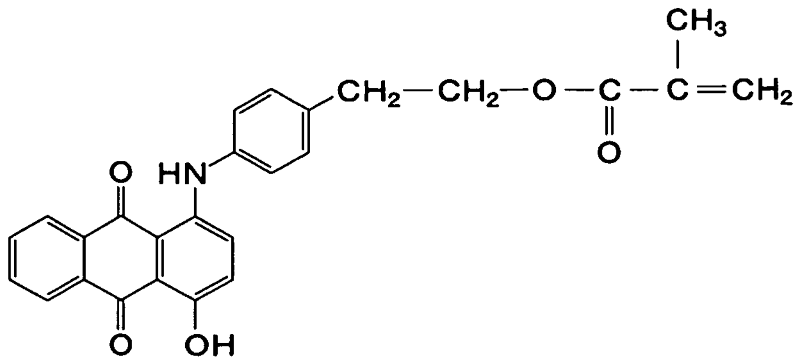

(1 1)

(hue: purple; hereinafter, referred to as "anthraquinone colorant 10"), and the like.

The anthraquinone colorant of the present invention can be synthesized according to a well-known method. For example, a benzene derivative having a halogen group and a hydroxyl group is first reacted with (meth)acrylate halide, allyl halide and/or vinyl halide to synthesize a coupler having a polymerizable double bond group. Subsequently, coupling of an anthraquinone derivative having an amino group with the coupler is allowed, thereby obtaining the anthraquinone colorant. It is to be noted that the coupler used in synthesizing the anthraquinone colorant of the present invention has an allyl group, a vinyl group, a (meth) acrylic acid ester group or a (meth)acrylamide group in the molecule.

Alternatively, the anthraquinone colorant of the present invention can be obtained also by subjecting an anthraquinone colorant having a halogen group, and a styrene derivative having an amino group to a coupling reaction. Alternatively, the anthraquinone colorant of the present invention can be obtained also by subjecting an anthraquinone colorant having an amino group, and a styrene derivative having a halogen group to a coupling reaction.

<High Molecular Anthraquinone Colorant>

The high molecular anthraquinone colorant of the present invention is obtained by formation of a covalent bond between the anthraquinone colorant and the monomer (I) for an ophthalmic lens.

Since the high molecular anthraquinone colorant has a high molecular weight, it will have potent bindability or interaction in an ophthalmic lens owing to an entangling effect, etc. with the high molecular chain of the resin constituting the ophthalmic lens. Therefore, according to the high molecular anthraquinone colorant, even if the resultant colored lens is boiled or immersed in water or an organic solvent, elution of the colorant from the lens is inhibited, and thus the lens can be prevented from decoloration. In addition, since the high molecular anthraquinone colorant is thus capable of strongly binding to or interacting with a resin, etc., that constitutes the ophthalmic lens, deterioration is less likely to occur, and superior durability is achieved. Furthermore, the high molecular anthraquinone colorant can improve the miscibility with the ophthalmic lens material by selecting the monomer (I).

Although the high molecular anthraquinone colorant may or may not have an unsaturated double bond, those having an unsaturated double bond are preferred in light of bindability or interaction in the ophthalmic lens. When the high molecular anthraquinone colorant has an unsaturated double bond, formation of a covalent bond with the monomer for an ophthalmic lens having an unsaturated double bond is enabled. Therefore, according to the high molecular anthraquinone colorant, not only an effect of just entangling with the ophthalmic lens material, but also improvement of the elution resistance of the colorant from the colored ophthalmic lens, and the durability is enabled since extremely high bindability can be obtained through forming a covalent bond with the monomer for an ophthalmic lens.

The lower limit of the molecular weight (polystyrene equivalent mass average molecular weight) of the high molecular anthraquinone colorant is 1,000, more preferably 3,000, and particularly preferably 5,000. Also, the upper limit of the molecular weight (polystyrene equivalent mass average molecular weight) of the high molecular anthraquinone colorant is preferably 100,000, more preferably 50,000, and particularly preferably 30,000. When the molecular weight (polystyrene equivalent mass average molecular weight) is less than the lower limit, entangling with the high molecular chain of the resin constituting the ophthalmic lens is not sufficient; therefore, it is impossible to achieve high interaction and bindability, and as a result, elution resistance can be less improved. To the contrary, when the molecular weight (polystyrene equivalent mass average molecular weight) is beyond the upper limit described above, miscibility of the colorant may be deteriorated depending on the component of the monomer for the ophthalmic lens, due to the too large molecular weight.

The monomer (I) for an ophthalmic lens is not particularly limited as long as it is a monomer capable of forming

a covalent bond with the anthraquinone colorant, and may be exemplified by a monomer having a polydimethylsiloxane structure (hereinafter, may be also referred to as "monomer A"), a hydrophilic monomer for an ophthalmic lens (hereinafter, may be also referred to as "monomer B"), or a nonhydrous ophthalmic lens monomer (hereinafter, may be also referred to as "monomer C"). These may be used either one type alone, or as a mixture of a plurality of types.

Owing to having a polydimethylsiloxane structure, the high molecular anthraquinone colorant in which a monomer having a polydimethylsiloxane structure (monomer A) is used has high compatibility with silicone based compounds often used as an ophthalmic lens material, in general, the high molecular anthraquinone colorant can be easily and homogenously diffused in the ophthalmic lens material, and can be retained by means of the other ophthalmic lens material.

The polydimethylsiloxane structure as referred to means a structure represented by the following formula (12):

[chemical formula 15]

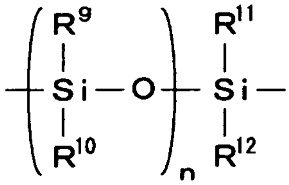

(1 2)

In the formula (12), $R^9$, $R^{10}$, $R^{11}$ and $R^{12}$ each independently represent a hydrogen atom, an alkyl group having 1 to 6 carbon atoms, a fluorine-substituted alkyl group having 1 to 6 carbon atoms, a hydroxy group or a phenyl group.

Examples of the monomer having a polydimethylsiloxane structure (monomer A) include compounds constituted with a skeleton such as polydimethylsiloxane, polydimethylsiloxane-co-hydromethylsiloxane, polydiphenylsiloxane-co-phenylhydrosiloxane, polyhydromethylsiloxane-co-methylphenylsiloxane, polyhydrophenylsiloxane-co-methylphenylsiloxane, polysiloxane-co-hydromethylsiloxane having a fluorine-substituted alkyl group or alkoxy group and a methyl group in the side chain, polysiloxane-co-hydromethylsiloxane having a polyalkyleneoxyalkyl group and a methyl group in the side chain, or the like.

The monomer A has an unsaturated double bond in the molecule. When the monomer A is used, the high molecular anthraquinone colorant can leave an unsaturated double bond in the molecule of the colorant. The high molecular anthraquinone colorant having thus remaining unreacted unsaturated double bond can be copolymerized with a monomer for an ophthalmic lens having an unsaturated double bond. Therefore, the high molecular anthraquinone colorant enables the elution resistance and durability of the colored matter to be improved since extremely high bindability can be achieved through forming a covalent bond with the monomer for an ophthalmic lens, not alone the effect of merely entangling with the ophthalmic lens material. The monomer A having an unsaturated double bond is exemplified by each polydimethylsiloxane described above into which an unsaturated double bond was introduced at the end or the side chain, or the like.

As a method for forming a covalent bond between the anthraquinone colorant of the present invention and the monomer A, a general addition reaction may be employed. Examples of the addition reaction may involve a process of addition of a polymerizable double bond in the anthraquinone colorant of the present invention to polydimethylsiloxane having a hydrosilyl group (Si-H) in the structure, in the presence of a catalyst, and the like. The catalyst which may be used includes chloroplatinic acid, a complex of platinum and siloxane, and the like. In addition, the monomer A having an unsaturated double bond can be synthesized by a procedure such as capping two ends of the monomer A having the structure described above with allyl alcohol, and then isocyanatoethyl methacrylate, or the like. According to such a method, a high molecular anthraquinone colorant having an anthraquinone colorant introduced into the side chain of the monomer A can be synthesized.

In the synthesis of such a high molecular anthraquinone colorant, the content of the anthraquinone colorant in the reaction system is preferably no less than 0.5 parts by mass and no greater than 100 parts by mass with respect to 100 parts by mass of the monomer A.

Specific examples of the high molecular anthraquinone colorant as the high molecular anthraquinone colorant having an unsaturated double bond in the molecule include a compound (hue: purple; hereinafter, referred to as "high molecular anthraquinone colorant 1") represented by the following formula (13):

[chemical formula 16]

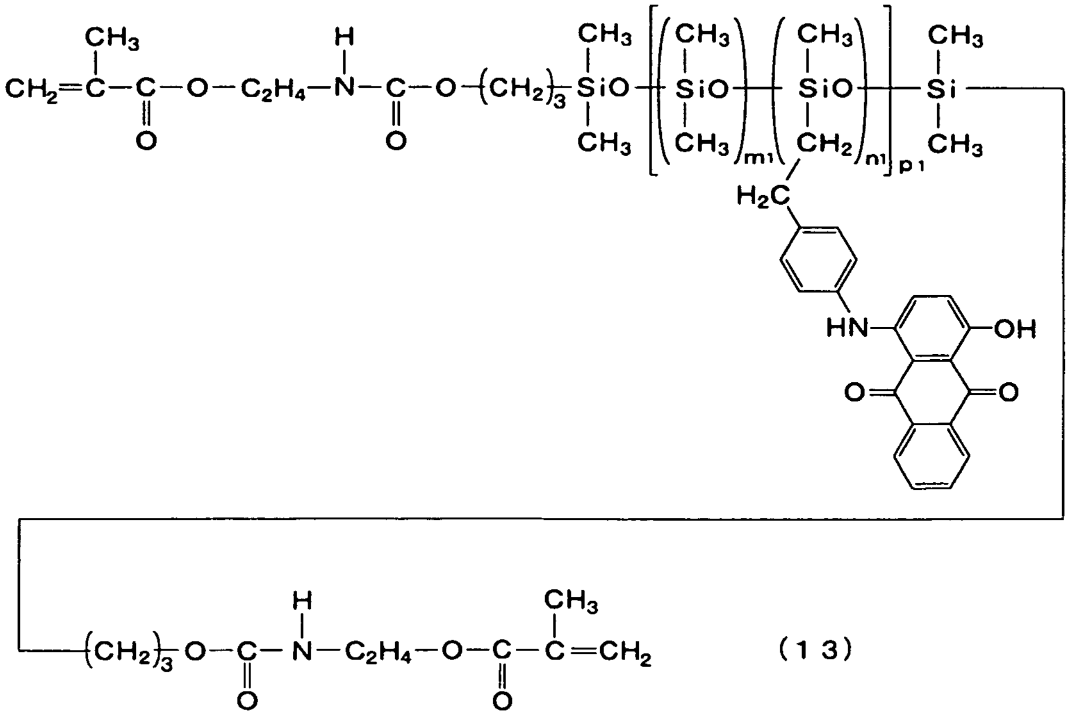

(1 3)

in the formula (13), $m_1$ is each independently an integer of 0 to 100, $n_1$ is each independently an integer of 1 to 100, and $p_1$ is an integer of 1 to 100.

Specific examples of the high molecular anthraquinone colorant not having an unsaturated polymerizable group in the molecule include a compound (hue: purple; hereinafter, referred to as "high molecular anthraquinone colorant 2") represented by the following formula (14):

[chemical formula 17]

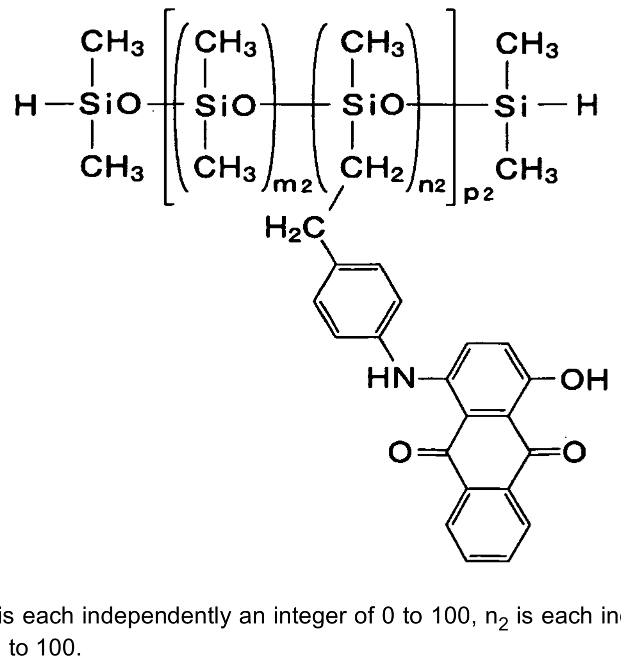

(1 4)

in the formula (14), $m_2$ is each independently an integer of 0 to 100, $n_2$ is each independently an integer of 1 to 100, and $p_3$ is an integer of 1 to 100.

The high molecular anthraquinone colorant may be a copolymer of the anthraquinone colorant of the present invention with the monomer (I) for an ophthalmic lens having other unsaturated double bond. As the monomer (I) for forming the high molecular anthraquinone colorant as such a copolymer, a hydrophilic monomer for an ophthalmic lens

(monomer B) and/or a nonhydrous monomer for an ophthalmic lens (monomer C) may be used as described above.

Since the high molecular anthraquinone colorant obtained by copolymerization with the monomer (I) for an ophthalmic lens has a high molecular weight, it has potent bindability in an ophthalmic lens owing to an entangling effect with the high molecular chain of the resin constituting the ophthalmic lens. Therefore, according to the high molecular anthraquinone colorant, even if the resultant colored lens is boiled, or immersed in water or an organic solvent, decoloring of the lens can be prevented without elution of the colorant from the lens. Additionally, since the high molecular anthraquinone colorant can be strongly bound to the resin and the like constituting the ophthalmic lens resistance to deterioration, and superior durability may be provided. Moreover, the high molecular anthraquinone colorant can have improved miscibility with the ophthalmic lens material by selecting the monomer (I). For example, when the monomer B is predominantly used, miscibility with the component of the material for a hydrous ophthalmic lens can be improved, whereas when the monomer C is predominantly used, miscibility with the component of the material for a nonhydrous ophthalmic lens can be improved.

It is also preferred that the high molecular anthraquinone colorant obtained by copolymerization with the monomer (I) for an ophthalmic lens has an unsaturated double bond in the molecule. According to the high molecular anthraquinone colorant having an unreacted unsaturated double bond remaining in this manner, copolymerization with the monomer for an ophthalmic lens having an unsaturated double bond is enabled. Therefore, the high molecular anthraquinone colorant enables the elution resistance and durability of the colored matter to be improved since extremely high bindability can be achieved through forming a covalent bond with the monomer for an ophthalmic lens, not alone the effect of merely entangling with the ophthalmic lens material.

Furthermore, the copolymer, the high molecular anthraquinone colorant, may be obtained from a mixture containing as the monomer (I) for an ophthalmic lens other than the monomer B and the monomer C such as, for example, the monomer A, etc. By thus including the monomer A, the side chain or the like of the high molecular anthraquinone colorant as the copolymer can be imparted to a structure derived from the monomer A, whereby miscibility with the component of the material for an ophthalmic lens can be improved.

As the monomer B, for example, a hydrophilic monomer exemplified in the pamphlet of PCT International Publication No. 2005/116728 on page 15, and a pyrrolidone derivative, N-substituted acrylamide and hydrophilic monomer exemplified in the pamphlet of PCT International Publication No. 2004/063795 on page 15, pages 20 to 21 and pages 23 to 24 may be used.

Specific examples of the monomer B include e.g., (meth)acrylamide; methoxyalkyl acrylate such as 2-methoxyethyl acrylate; hydroxyalkyl (meth)acrylate such as 2-hydroxyethyl (meth)acrylate, hydroxypropyl (meth)acrylate and hydroxybutyl (meth)acrylate; (alkyl)aminoalkyl (meth)acrylate such as 2-dimethylaminoethyl (meth)acrylate and 2-butylaminoethyl (meth)acrylate; alkylene glycol mono(meth)acrylate such as ethylene glycol mono(meth)acrylate and propylene glycol mono(meth)acrylate; polyalkylene glycol mono(meth)acrylate such as polyethylene glycol mono(meth)acrylate and polypropylene glycol mono(meth)acrylate; ethylene glycol allyl ether; ethylene glycol vinyl ether; (meth)acrylic acid; aminostyrene; hydroxystyrene; vinyl acetate; glycidyl (meth)acrylate; allyl glycidyl ether; vinyl propionate; N,N-dimethylacrylamide, N,N-dimethylmethacrylamide, N,N-diethylacrylamide, N,N-diethylmethacrylamide, N-(2-hydroxyethyl)methacrylamide, N-isopropyl(meth)acrylamide, N-(2-hydroxyethyl)acrylamide, acryloylmorpholine, methacryloylmorpholine; N-vinyl-2-pyrrolidone, N-vinyl-3-methyl-2-pyrrolidone, N-vinyl-4-methyl-2-pyrrolidone, N-vinyl-5-methyl-2-pyrrolidone, N-vinyl-6-methyl-2-pyrrolidone, N-vinyl-3-ethyl-2-pyrrolidone, N-vinyl-4,5-dimethyl-2-pyrrolidone, N-vinyl-5,5-dimethyl-2-pyrrolidone, N-vinyl-3,3,5-trimethyl-2-pyrrolidone, N-vinyl-2-piperidone, N-vinyl-3-methyl-2-piperidone, N-vinyl-4-methyl-2-piperidone, N-vinyl-5-methyl-2-piperidone, N-vinyl-6-methyl-2-piperidone, N-vinyl-6-ethyl-2-piperidone, N-vinyl-3,5-dimethyl-2-piperidone and N-vinyl-4,4-dimethyl-2-piperidone, and N-vinyllactam such as N-vinyl-2-caprolactam, N-vinyl-3-methyl-2-caprolactam, N-vinyl-4-methyl-2-caprolactam, N-vinyl-7-methyl-2-caprolactam, N-vinyl-7-ethyl-2-caprolactam, N-vinyl-3,5-dimethyl-2-caprolactam, N-vinyl-4,6-dimethyl-2-caprolactam and N-vinyl-3,5,7-trimethyl-2-caprolactam; pyrrolidone derivatives having a methylene group as a polymerizable group, such as N-vinylamide such as N-vinylformamide, N-vinyl-N-methylformamide, N-vinyl-N-ethylformamide, N-vinylacetamide, N-vinyl-N-methylacetamide, N-vinyl-N-ethylacetamide and N-vinylphthalimide; 1-methyl-3-methylene-2-pyrrolidone, 1-ethyl-3-methylene-2-pyrrolidone, 1-methyl-5-methylene-2-pyrrolidone, 1-ethyl-5-methylene-2-pyrrolidone, 5-methyl-3-methylene-2-pyrrolidone, 5-ethyl-3-methylene-2-pyrrolidone, 1-n-propyl-3-methylene-2-pyrrolidone, 1-n-propyl-5-methylene-2-pyrrolidone, 1-i-propyl-3-methylene-2-pyrrolidone, 1-i-propyl-5-methylene-2-pyrrolidone, 1-n-butyl-3-methylene-2-pyrrolidone and 1-t-butyl-3-methylene-2-pyrrolidone, and the like.

Specific examples of the monomer C include e.g., (meth)acrylic acid esters such as alkyl (meth)acrylate, siloxanyl (meth)acrylate, fluoroalkyl (meth)acrylate, phenoxyalkyl (meth)acrylate and phenylalkyl (meth)acrylate, alkoxyalkyl (meth)acrylate, and the like.

Further, as the monomer (I) for forming the copolymer, the high molecular anthraquinone colorant, through copolymerizing with the anthraquinone colorant, (meth)acrylic acid derivatives, styrene derivatives, allyl group-containing compounds, vinyl group-containing compounds, exomethylene group-containing compounds, and the like are also preferred. It is to be noted that some of these monomers may be included in the monomer A, the monomer B and the

monomer C described above.

Examples of the (meth)acrylic acid derivative include linear, branched or cyclic alkyl (meth)acrylate, alkoxyalkyl (meth)acrylate and alkylthioalkyl (meth)acrylate such as methyl (meth)acrylate, ethyl (meth)acrylate, isopropyl (meth) acrylate, n-propyl (meth)acrylate, isobutyl (meth)acrylate, n-butyl (meth)acrylate, 2-ethylhexyl (meth)acrylate, n-octyl (meth)acrylate, n-decyl (meth)acrylate, n-dodecyl (meth)acrylate, pentyl (meth)acrylate, n-pentyl (meth)acrylate, hexyl (meth)acrylate, heptyl (meth)acrylate, nonyl (meth)acrylate, stearyl (meth)acrylate, cyclopentyl (meth)acrylate, cyclohexyl (meth)acrylate, 2-ethoxyethyl (meth)acrylate, 3-ethoxypropyl (meth)acrylate, 2-methoxyethyl (meth)acrylate, 3-methoxypropyl (meth)acrylate, ethylthioethyl (meth)acrylate and methylthioethyl (meth)acrylate, and the like.

Also, examples of silicon-containing (meth)acrylic acid derivative include trimethylsiloxydimethylsilylmethyl (meth)acrylate, trimethylsiloxydimethylsilylpropyl (meth)acrylate, methylbis(trimethylsiloxy)silylpropyl (meth)acrylate, tris (trimethylsiloxy)silylpropyl (meth)acrylate, mono[methylbis(trimethylsiloxy)siloxy]bis(trimethylsiloxy)silylpro pyl (meth) acrylate, tris[methylbis(trimethylsiloxy)siloxy]silylpropyl (meth)acrylate, methylbis(trimethylsiloxy)silylpropylglyceryl (meth)acrylate, tris(trimethylsiloxy)silylpropylglyceryl (meth)acrylate, mono[methylbis(trimethylsiloxy)siloxy]bis(trimethylsiloxy)silylpro pylglyceryl (meth)acrylate, trimethylsilylethyltetramethyldisiloxypropylglyceryl (meth)acrylate, trimethylsilylmethyl (meth)acrylate, trimethylsilylpropyl (meth)acrylate, trimethylsilylpropylglyceryl (meth)acrylate, trimethylsiloxydimethylsilylpropylglyceryl (meth)acrylate, methylbis(trimethylsiloxy)silylethyltetramethyldisiloxymethyl (meth)acrylate, tetramethyltriisopropylcyclotetrasiloxanylpropyl (meth)acrylate,
tetramethyltriisopropylcyclotetrasiloxybis(trimethylsiloxy)silylpr opyl (meth)acrylate, and the like.

Examples of the styrene derivative include α-methylstyrene, methylstyrene, ethylstyrene, propylstyrene, butylstyrene, t-butylstyrene, isobutylstyrene, pentylstyrene, methyl-α-methylstyrene, ethyl-α-methylstyrene, propyl-α-methylstyrene, butyl-α-methylstyrene, t-butyl-α-methylstyrene, isobutyl-α-methylstyrene, pentyl-α-methylstyrene, and the like.

Furthermore, examples of silicon-containing styrene derivative include e.g., tris(trimethylsiloxy)silylstyrene, bis (trimethylsiloxy)methylsilylstyrene, (trimethylsiloxy)dimethylsilylstyrene, tris(trimethylsiloxy)siloxydimethylsilylstyrene, [bis(trimethylsiloxy)methylsiloxyldimethylsilylstyrene, (trimethylsiloxy)dimethylsilylstyrene, heptamethyltrisiloxanylstyrene, nonamethyltetrasiloxanylstyrene, pentadecamethylheptasiloxanylstyrene, heneicosamethyldecasiloxanylstyrene, heptacosamethyltridecasiloxanylstyrene, hentriacontamethylpentadecasiloxanylstyrene, trimethylsiloxypentamethyldisiloxymethylsilylstyrene, tris(pentamethyldisiloxy)silylstyrene, tris(trimethylsiloxy)siloxybis(trimethylsiloxy)silylstyrene, bis(heptamethyltrisiloxy)methylsilylstyrene, tris[methylbis(trimethylsiloxy)siloxy]silylstyrene, trimethylsiloxybis[tris(trimethylsiloxy)siloxy]silylstyrene, heptakis(trimethylsiloxy)trisilylstyrene, nonamethyltetrasiloxyundecylmethylpentasiloxymethylsilylstyrene, tris[tris(trimethylsiloxy)siloxy]silylstyrene, (tristrimethylsiloxyhexamethyl)tetrasiloxy[tris(trimethylsiloxy)si loxy]trimethylsiloxysilylstyrene, nonakis(trimethylsiloxy)tetrasilylstyrene, bis(tridecamethylhexasiloxy)methylsilylstyrene, heptamethylcyclotetrasiloxanylstyrene, heptamethylcyclotetrasiloxybis(trimethylsiloxy)silylstyrene, tripropyltetramethylcyclotetrasiloxanylstyrene, trimethylsilylstyrene, and the like.

Examples of the allyl group-containing compound include ethylene glycol diallyl carbonate, trimellitic acid triallyl ester, triallyl isocyanurate, and the like.

Examples of the vinyl group-containing compound include divinylbenzene, ethylene glycol di(meth)acrylate, trimethylolpropane tri(meth)acrylate, urethane modified (meth)acrylate, epoxy modified (meth)acrylate and polyester modified (meth)acrylate containing at least two or more (meth)acryloxy groups in one molecule, and the like.

Examples of the exomethylene group-containing compound include methylenecyclohexane, 5-methylenecyclopentadiene, dimethyl 3-methylenecyclopropane-1,2-dicarboxylate, α-methylene-γ-butyrolactone, and the like.

The high molecular anthraquinone colorant that is a copolymer with such a monomer (I) for an ophthalmic lens having an unsaturated double bond can be obtained by mixing the anthraquinone colorant and the monomer (I) for an ophthalmic lens having an unsaturated double bond in an appropriate organic solvent, and allowing to be polymerized by a well-known method. In synthesizing the high molecular anthraquinone colorant that is a copolymer with the monomer (I) for an ophthalmic lens having an unsaturated double bond, the content of the anthraquinone colorant in the reaction system is preferably no less than 0.5 parts by mass and no greater than 100 parts by mass with respect to 100 parts by mass of the monomer (I) for an ophthalmic lens.

The aforementioned appropriate organic solvent is not particularly limited as long as it can sufficiently dissolve the monomer (I) for an ophthalmic lens having an unsaturated double bond such as the monomer B and the monomer C, and is preferably water, a water soluble solvent such as methanol, ethanol, 1-propanol, 2-propanol, acetone, acetonitrile, tetrahydrofuran or N-methyl-2-pyrrolidone. The organic solvent may be selected ad libitum depending on the type of the monomer (I) for an ophthalmic lens so as to use a solvent which can dissolve the monomer (I) for an ophthalmic lens employed. In addition, these organic solvents may be used alone, or as a mixture of two or more thereof. Also, the solvent enables the high molecular anthraquinone colorant obtained by copolymerization to be washed and purified.

Moreover, in synthesizing the high molecular anthraquinone colorant, polymerization may be carried out by adding a radical polymerization initiator as needed, and then gradually heating in the range of a temperature of from room temperature to about 130°C, or irradiating with electromagnetic wave such as a microwave, ultraviolet ray or

radioactive ray (γ-ray) or the like. In addition, the polymerization may be carried out with a bulk polymerization technique, or a solution polymerization technique using a solvent or the like. Whereas, when thermal polymerization is permitted, the may be elevated stepwise.

Specific examples of the radical polymerization initiator include e.g., azo type polymerization initiators such as 2,2'-azobisisobutylnitrile and azobisdimethylvaleronitrile; peroxide type polymerization initiator such as benzoyl peroxide, tert-butyl hydroperoxide and cumene hydroperoxide, and the like.

Examples of the polymerization initiator for electromagnetic wave include e.g., phosphine oxide type polymerization initiators such as 2,4,6-trimethylbenzoyl-diphenylphosphine oxide (TPO) and bis(2,4,6-trimethylbenzoyl)-phenylphosphine oxide; benzoin type polymerization initiators such as methylorthobenzoyl benzoate, methylbenzoyl formate, benzoin methyl ether, benzoin ethyl ether, benzoin isopropyl ether, benzoin isobutyl ether and benzoin-n-butyl ether; phenone type polymerization initiators such as 2-hydroxy-2-methyl-1-phenylpropan-1-one, p-isopropyl-α-hydroxyisobutylphenone, p-t-butyltrichloroacetophenone, 2,2-dimethoxy-2-phenylacetophenone, α,α-dichloro-4-phenoxyacetophenone and N,N-tetraethyl-4,4-diaminobenzophenone; 1-hydroxycyclohexyl phenyl ketone; 1-phenyl-1,2-propane dione-2-(o-ethoxycarbonyl)oxime; thioxanthone type polymerization initiators such as 2-chlorothioxanthone and 2-methylthioxanthone; dibenzosuberone; 2-ethylanthraquinone; benzophenone acrylate; benzophenone; benzyl, and the like. These may be used alone, or as a mixture of two or more thereof.

The amount of the polymerization initiator used falls within the range of generally about 0.01 to 5 parts by mass with respect to 100 parts by mass of the entire mixture subjected to the polymerization (the anthraquinone colorant and the monomer (I) for an ophthalmic lens).

<Ophthalmic Lens Material>

The material for an ophthalmic lens of the present invention contains a polymer formed by curing through the polymerization of a composition containing the anthraquinone colorant or high molecular anthraquinone colorant of the present invention, and the monomer (II) for an ophthalmic lens having an unsaturated double bond, and including the monomer (II) for an ophthalmic lens in the form of a monomer. Since the ophthalmic lens material contains the anthraquinone colorant or high molecular anthraquinone colorant, superior miscibility with and bindability to the monomer (II) for an ophthalmic lens having an unsaturated double bond can be achieved, and uniform coloring is enabled, which is accompanied by high elution resistance.

In the ophthalmic lens material, a covalent bond may or may not be formed between the colorant of the present invention and the monomer (II) for an ophthalmic lens. However, in any of these cases, the ophthalmic lens material can allow the colorant to be tightly fixed in the material. When the ophthalmic lens material contains the anthraquinone colorant or the high molecular anthraquinone colorant having an unsaturated double bond of the present invention, these colorants have an unsaturated double bond in the molecule. Therefore, the ophthalmic lens material can be covalently bound to the monomer (II) for an ophthalmic lens, and the colorant is enabled to be fixed as a result of the strong binding of the colorant in the ophthalmic lens material. Also, even in the case in which the ophthalmic lens material is only a high molecular anthraquinone colorant not having an unsaturated double bond, binding is permitted as a result of entangling of the polymer chain of the high molecular anthraquinone colorant with the monomer (II) for an ophthalmic lens. Therefore, also an ophthalmic lens material containing only such a high molecular anthraquinone colorant not having an unsaturated double bond, tight fixation of the colorant is enabled.

Although the monomer (II) for an ophthalmic lens having an unsaturated double bond is not particularly limited, a (meth)acrylic acid derivative, a styrene derivative, an allyl group-containing compound, a vinyl group-containing compound, an exo-methylene group-containing compound and the like are preferred similarly to the monomer (I) for an ophthalmic lens. Additionally, the monomer (II) for an ophthalmic lens having an unsaturated double bond is preferably the monomer A, monomer B or monomer C having an unsaturated double bond.

The monomer A having an unsaturated double bond used as the monomer (II) for an ophthalmic lens further preferably, has a polydimethylsiloxane structure and an unsaturated double bond via an urethane bond. Such a monomer A is a component having an elastic bond which is referred to as "urethane bond", reinforcement is permitted without deteriorating the flexibility and oxygen permeability of the material owing to a siloxane moiety, and properties of giving elastic resilience to obviate brittleness, and improving the mechanical strength are imparted. Additionally, since the monomer A has a silicone chain in the molecular chain, high oxygen permeability can be imparted to the product. Also, due to having an unsaturated double bond, and being capable of copolymerized with other copolymerizable component via such a polymerizable group, the monomer A has excellent properties of imparting not only a physical reinforcement effect by entangling of the molecule with the resulting ophthalmic lens material, but also a reinforcement effect by a chemical bond (covalent bond). In other words, the monomer A having a polydimethylsiloxane structure and an unsaturated double bond via an urethane bond can act as a high molecular crosslinkable monomer.

Typical examples of the monomer A having a polydimethylsiloxane structure and an unsaturated double bond via an urethane bond include those represented by the following general formula (15):

$A^1-U^1-(-S^1-U^2-)_n-S^2-U^3-A^2$ (15)

in the formula (15), $A^1$ represents a group represented by the following general formula (16):

$Y^{11}-Z^{11}-R^{13}-$ (16)

in the formula (16), $Y^{11}$ represents a (meth)acryloyl group, a vinyl group or an allyl group; $Z^{11}$ represents an oxygen atom or a direct bond; and $R^{13}$ represents a direct bond or an alkylene group having a linear or branched chain or an aromatic ring having 1 to 12 carbon atoms;
$A^2$ represents a group represented by the following general formula (17) :

$-R^{14}-Z^{12}-Y^{12}$ (17)

in the formula (17), $Y^{12}$ represents a (meth)acryloyl group, a vinyl group or an allyl group; $Z^{12}$ represents an oxygen atom or a direct bond; and $R^{14}$ represents a direct bond or an alkylene group having a linear or branched chain or an aromatic ring having 1 to 12 carbon atoms,
wherein, $Y^{11}$ in the general formula (16), and $Y^{12}$ in the general formula (17) may be the same or different;
$U^1$ represents a group represented by the following general formula (18) :

$-X^{11}-E^{11}-X^{15}-R^{15}-$ (18)

in the formula (18), $X^{11}$ and $X^{15}$ each independently represent a direct bond, an oxygen atom or an alkylene glycol group; $E^{11}$ represents a -NHCO- group (wherein, in this case, $X^{11}$ represents a direct bond; $X^{15}$ represents an oxygen atom or an alkylene glycol group; and $E^{11}$ forms an urethane bond with $X^{15}$), a -CONH- group (wherein, in this case, $X^{11}$ represents an oxygen atom or an alkylene glycol group; $X^{15}$ represents a direct bond; and $E^{11}$ forms an urethane bond with $X^{11}$), or a bivalent group derived from a diisocyanate selected from the group consisting of saturated or unsaturated aliphatic, alicyclic and aromatic diisocyanates (wherein, in this case, $X^{11}$ and $X^{15}$ are each independently selected from an oxygen atom and an alkylene glycol group; and $E^{11}$ forms two urethane bonds between $X^{11}$ and $X^{15}$); $R^{15}$ represents an alkylene group having a linear or branched chain having 1 to 6 carbon atoms);
$S^1$ and $S^2$ each independently represent a group represented by the following general formula (19):

[chemical formula 18]

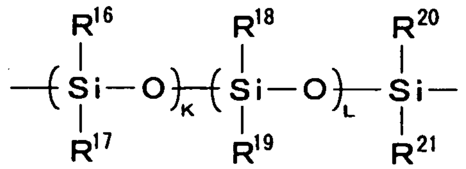

(19)

in the formula (19), $R^{16}$, $R^{17}$, $R^{18}$, $R^{19}$, $R^{20}$ and $R^{21}$ each independently represent an alkyl group having 1 to 6 carbon atoms, a fluorine-substituted alkyl group, phenyl group or hydrogen atom; K is an integer of 10 to 100; L is 0 or an integer of 1 to 90; and the sum of K and L is an integer of 10 to 100;
$U^2$ represents a group represented by the following general formula (20):

$-R^{22}-X^{17}-E^{14}-X^{18}-R^{23}-$ (20)

in the formula (20), $R^{22}$ and $R^{23}$ each independently represent an alkylene group having a linear or branched chain having 1 to 6 carbon atoms; $X^{17}$ and $X^{18}$ each independently represent an oxygen atom or an alkylene glycol group; $E^{14}$ represents a bivalent group derived from a diisocyanate selected from the group consisting of saturated or unsaturated aliphatic, alicyclic and aromatic diisocyanates (wherein, in this case, $E^{14}$ forms two urethane bonds between $X^{17}$ and $X^{18}$);
$U^3$ represents a group represented by the following general formula (21):

$-R^{24}-X^{16}-E^{12}-X^{12}-$ (21)

in the formula (21), $R^{24}$ represents an alkylene group having a linear or branched chain having 1 to 6 carbon atoms; $X^{12}$ and $X^{16}$ each independently represent a direct bond, an oxygen atom or an alkylene glycol group; $E^{12}$ represents a -NHCO- group (wherein, in this case, $X^{12}$ represents an oxygen atom or an alkylene glycol group; and $X^{16}$ represents a direct bond; $E^{12}$ forms an urethane bond with $X^{12}$), a -CONH- group (wherein, in this case, $X^{12}$ represents a direct bond; $X^{16}$ represents an oxygen atom or an alkylene glycol group; and $E^{12}$ forms an urethane bond with $X^{16}$) or a bivalent group derived from a diisocyanate selected from the group consisting of saturated or unsaturated aliphatic, alicyclic and aromatic diisocyanates (wherein, in this case, $X^{12}$ and $X^{16}$ are each independently selected from an oxygen atom and an alkylene glycol group; and $E^{12}$ forms two urethane bonds between $X^{12}$ and $X^{16}$); and n is an integer of 0 to 10.

In the above general formula (16) and formula (17), $Y^{11}$ and $Y^{12}$ both represent a polymerizable group, and in light of capability of facile copolymerization with the anthraquinone colorant or the high molecular anthraquinone colorant having an unsaturated double bond, a (meth)acryloyl group is particularly preferred.

In the above general formula (16) and formula (17), $Z^{11}$ and $Z^{12}$ both represent an oxygen atom or a direct bond, and preferably an oxygen atom; $R^{13}$ and $R^{14}$ both represent a direct bond or an alkylene group having a linear or branched chain or an aromatic ring having 1 to 12 carbon atoms, and preferably an alkylene group having 2 to 4 carbon atoms; $U^1$, $U^2$ and $U^3$ represent a group that includes an urethane bond in the molecular chain.

In $U^1$ and $U^3$ in the above general formula (15), $E^{11}$ and $E^{12}$ each represent a -CONH- group, a -NHCO- group or a bivalent group derived from a diisocyanate selected from the group consisting of saturated or unsaturated aliphatic, alicyclic and aromatic diisocyanates, as described above. Wherein, examples of the bivalent group derived from a diisocyanate selected from the group consisting of saturated or unsaturated aliphatic, alicyclic and aromatic diisocyanates include bivalent groups derived from a saturated aliphatic diisocyanate such as ethylene diisocyanate, 1,3-diisocyanatepropane or hexamethylenediisocyanate; bivalent groups derived from an alicyclic diisocyanate such as 1,2-diisocyanatecyclohexane, bis(4-isocyanatecyclohexyl)methane or isophoronediisocyanate; bivalent groups derived from an aromatic diisocyanate such as tolylenediisocyanate or 1,5-diisocyanatenaphthalene; and bivalent groups derived from an unsaturated aliphatic diisocyanate such as 2,2'-diisocyanatediethyl fumarate. Of these examples, in light of availability and ability to impart strength to the lens, bivalent groups derived from hexamethylenediisocyanate, bivalent groups derived from tolylenediisocyanate, and bivalent groups derived from isophoronediisocyanate are preferred.

In $U^1$ in the above general formula (15), when $E^{11}$ represents a -NHCO- group, $X^{11}$ represents a direct bond and $X^{15}$ represents an oxygen atom or an alkylene glycol group, and $E^{11}$ forms an urethane bond represented by the formula of -NHCOO-, with $X^{15}$. Alternatively, when $E^{11}$ represents a -CONH- group, $X^{11}$ represents an oxygen atom or an alkylene glycol group and $X^{15}$ represents a direct bond, and $E^{11}$ forms an urethane bond represented by the formula of -OCONH-, with $X^{11}$. Furthermore, when $E^{11}$ represents the bivalent group derived from any one of the foregoing diisocyanates, $X^{11}$ and $X^{15}$ preferably, each independently selected from an oxygen atom and an alkylene glycol group having 1 to 6 carbon atoms, and $E^{11}$ forms two urethane bonds between $X^{11}$ and $X^{15}$. $R^{15}$ represents an alkylene group having a linear or branched chain having 1 to 6 carbon atoms.

In $U^2$ in the above general formula (15), $E^{14}$ represents a bivalent group derived from a diisocyanate selected from the group consisting of saturated or unsaturated aliphatic, alicyclic and aromatic diisocyanates, as described above. Wherein, examples of the bivalent group derived from a diisocyanate selected from the group consisting of saturated or unsaturated aliphatic, alicyclic and aromatic diisocyanates include bivalent groups similar to those in $U^1$ and $U^3$. Of these examples, in light of availability and ability to impart strength to the lens, bivalent groups derived from hexamethylenediisocyanate, bivalent groups derived from tolylenediisocyanate, and bivalent groups derived from isophoronediisocyanate are preferred. Furthermore, $E^{14}$ forms two urethane bonds between $X^{17}$ and $X^{18}$. $X^{17}$ and $X^{18}$ preferably, each independently represent an oxygen atom or an alkylene glycol group having 1 to 6 carbon atoms, and $R^{22}$ and $R^{23}$ each independently represent an alkylene group having a linear or branched chain having 1 to 6 carbon atoms.

In $U^3$ in the above general formula (15), $R^{24}$ represents an alkylene group having a linear or branched chain having 1 to 6 carbon atoms. When $E^{12}$ represents a -NHCO- group, $X^{12}$ represents an oxygen atom or an alkylene glycol group and $X^{16}$ represents a direct bond, and $E^{12}$ forms an urethane bond represented by a formula of - NHCOO-, with $X^{12}$. Alternatively, when $E^{12}$ represents a -CONH- group, $X^{12}$ represents a direct bond and $X^{16}$ represents an oxygen atom or an alkylene glycol group, and $E^{12}$ forms an urethane bond represented by the formula of -OCONH-, with $X^{16}$. Furthermore, when $E^{12}$ represents the bivalent group derived from any one of the foregoing diisocyanates, $X^{12}$ and $X^{16}$ preferably, each independently selected from an oxygen atom and an alkylene glycol group having 1 to 6 carbon atoms, and $E^{12}$ forms two urethane bonds between $X^{12}$ and $X^{16}$.

The aforementioned $X^{11}$, $X^{15}$, $X^{17}$, $X^{18}$, $X^{12}$ and $X^{16}$ are preferably alkylene glycol having 1 to 20 carbon atoms. Such alkylene glycols having 1 to 20 carbon atoms are represented by the following general formula (22):

$$-O-(C_xH_{2x}-O)_y- \qquad (22)$$

in the formula, x is an integer of 1 to 4, and y is an integer of 1 to 5.

Examples of groups in which the aforementioned $R^{16}$, $R^{17}$, $R^{18}$, $R^{19}$, $R^{20}$ and $R^{21}$ represent a fluorine-substituted

alkyl group include groups represented by $-(CH_2)_m-C_pF_{2p+1}$ (wherein m is 1 to 10, and p is 1 to 10). Specific examples of such a fluorine-substituted alkyl group include side chain type fluorine-substituted alkyl groups such as a 3,3,3-trifluoro-n-propyl group, a 2-(perfluorobutyl)ethyl group and a 2-(perfluorooctyl)ethyl group, branched chain type fluorine-substituted alkyl groups such as a 2-(perfluoro-5-methylhexyl)ethyl group, and the like. When the amount of the compound having a fluorine-substituted alkyl group blended is increased, the lipid-deposit resistance of the lens obtained can be improved.

In the above general formula (19) representing $S^1$ and $S^2$, K is an integer of 10 to 100, L is 0 or an integer of 1 to 90, and the sum of K and L is an integer of 10 to 100 and preferably 10 to 80. When the sum of K and L is greater than 100, a greater molecular weight leads to deteriorated compatibility of the same with the anthraquinone colorant, high molecular anthraquinone colorant or the like, whereby phase separation occurs during polymerization to cause turbidity, and thus obtaining a lens that is uniform and transparent may fail. To the contrary, when the sum of K and L is less than 10, the oxygen permeability of the obtained lens may be lowered, and also the flexibility tends to decrease.

In the above general formula (15), n is an integer of 0 to 10, and preferably an integer of 0 to 5. When n is greater than 10, a greater molecular weight of the silicone compound leads to deteriorated compatibility of the same with other composition, whereby phase separation occurs during polymerization, and thus obtaining a uniform and transparent ophthalmic lens material may fail.

The monomer A having an unsaturated double bond may further have a hydrophilic polymer structure. Owing to this structure, the compatibility of the monomer A and the hydrophilic monomer B can be improved when these two monomers are both used, water wettability of the material for an ophthalmic lens containing the same can be improved. The structure of the hydrophilic polymer moiety may be exemplified by one or more types of polymers obtained by polymerization of a zwitter ionic group-containing monomer such as polyethylene glycol, polypropylene glycol, polyvinyl alcohol, polyvinylpyrrolidone, poly(meth)acrylic acid, poly(meth)acrylic acid salt, poly(2-hydroxyethyl (meth)acrylate), polytetrahydrofuran, polyoxetane, polyoxazoline, polydimethylacrylamide, polydiethylacrylamide, and poly(2-methacryloyloxyethylphosphorylcholine). The hydrophilic polymer structure moiety has a molecular weight of 100 to 1,000,000, and preferably 1,000 to 500,000. When the molecular weight is less than 100, hydrophilicity sufficient for attaining miscibility of the monomer A with the hydrophilic monomer B is less likely to be imparted. To the contrary, when the molecular weight is greater than 1,000,000, hydrophilic/ hydrophobic domains become so large that a transparent material is less likely to be obtained.

Specific examples of the monomer A having a polydimethylsiloxane structure and an unsaturated double bond via an urethane bond include compounds represented by the following formula (23), and the compounds represented by the formula (24).

[chemical formula 19]

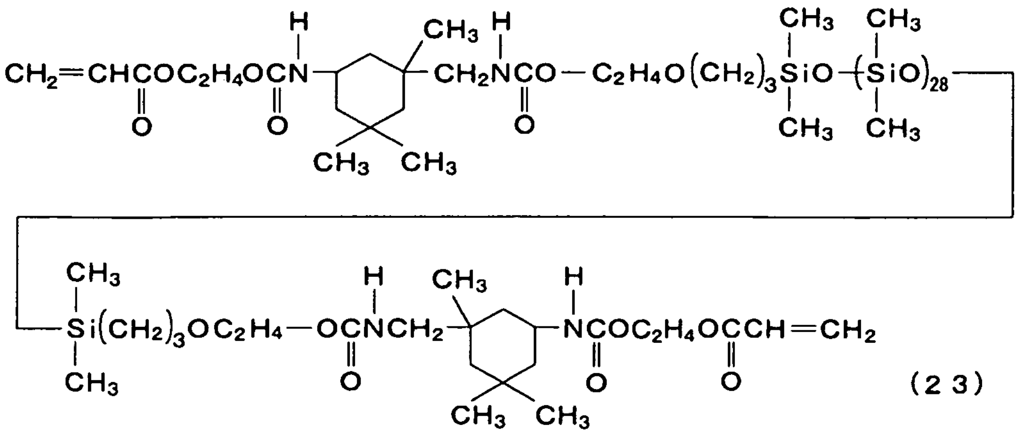

(2 3)

[chemical formula 20]

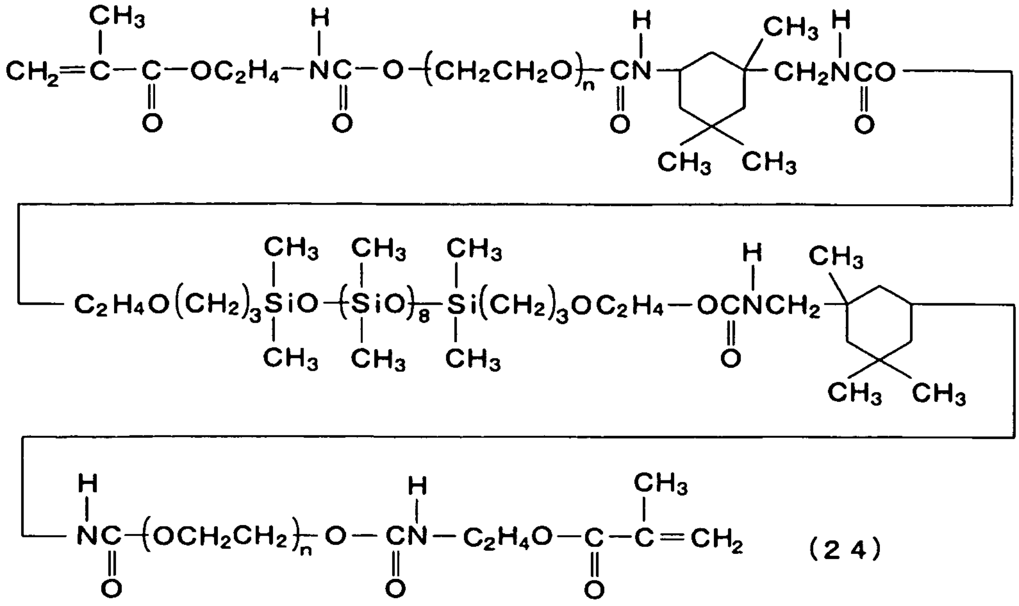

(2 4)

It is to be noted that in the case in which the ophthalmic lens desired is a hydrous ophthalmic lens, to the monomer A may be added the monomer B as a component of the composition of the material for an ophthalmic lens. In this case, the monomer A is included in an amount of preferably no less than 10 parts by mass and no greater than 90 parts by mass with respect to 100 parts by mass of the entire polymer components (except for the anthraquinone colorant and the high molecular anthraquinone colorant, and a crosslinking agent described later, the same applies in the following). When the amount of the monomer A used is less than the lower limit described above, sufficient oxygen permeability required for an ophthalmic lens may not be obtained. To the contrary, when the amount of the monomer A used is beyond the upper limit described above, difficulty in control of the mechanical characteristics may occur such as e.g., yielding of too soft or too hard ophthalmic lens material, depending on the molecule structure of the monomer A.

On the other hand, the monomer B is included in an amount of preferably no less than 10 parts by mass and no greater than 90 parts by mass with respect to 100 parts by mass of the entire polymer components. When the amount of the monomer B uses is less than the lower limit described above, expected hydrophilicity may not be expressed. To the contrary, when the amount of the monomer B used is beyond the upper limit described above, it is possible to lead to failure in expressing expected oxygen permeability.

In addition, in the case in which the desired ophthalmic lens is a nonhydrous ophthalmic lens which does not substantially contain moisture, to the monomer A may be added the monomer C as a component of the material for a lens. In the case of nonhydrous ophthalmic lens material, the monomer A is included in an amount of preferably no less than 5 parts by mass and no greater than 100 parts by mass with respect to 100 parts by mass of the entire polymer components. When the amount of the monomer A used is less than the lower limit described above, sufficient oxygen permeability required for an ophthalmic lens may not be obtained. Furthermore, the monomer C is included in an amount of preferably no greater than 95 parts by mass with respect to 100 parts by mass of the entire polymer components. When the amount of the monomer C used is beyond the upper limit described above, the ophthalmic lens material may be fragile.

Also, the anthraquinone colorant is included in an amount of preferably no less than 0.001 parts by mass and no greater than 0.5 parts by mass with respect to 100 parts by mass of the entire polymer components. When the amount of the anthraquinone colorant used is less than 0.001 parts by mass, the coloring effect may not be sufficiently achieved. Whereas, when amount of the anthraquinone colorant used is greater than 0.5 parts by mass, the color tone may be so dark to lead to loss of practicability, or it may be difficult to transmit the visible light ray.

Furthermore, the high molecular anthraquinone colorant is included in an amount of preferably no less than no less than 0.01 parts by mass and no greater than 5 parts by mass with respect to 100 parts by mass of the entire polymer components. When the amount of the high molecular anthraquinone colorant used is less than 0.01 parts by mass, it is impossible to sufficiently achieve the coloring effect. Whereas, when the amount of the high molecular anthraquinone colorant used is greater than 5 parts by mass, the color tone may be so dark to lead to loss of practicability, or it may be difficult to transmit the visible light ray. Alternatively, it may be difficult to result in miscibility in the polymer components, and the like.

It is to be noted that the composition may contain in addition to the anthraquinone colorant or high molecular anthraquinone colorant of the present invention and monomer (II) for an ophthalmic lens having an unsaturated double

bond, other component such as a crosslinking agent. The crosslinking agent can adjust the crosslinking density, flexibility, and hardness of the ophthalmic lens material obtained.

Examples of the crosslinking agent include e.g., allyl methacrylate, ethylene glycol di(meth)acrylate, diethylene glycol di(meth)acrylate, vinyl methacrylate, 4-vinylbenzyl methacrylate, 3-vinylbenzyl methacrylate, methacryloyloxyethyl acrylate, ethylene glycol dimethacrylate, diethylene glycol dimethacrylate, diethylene glycoldiallyl ether, triethylene glycol dimethacrylate, tetraethylene glycol dimethacrylate, propylene glycol dimethacrylate, dipropylene glycol dimethacrylate, butanediol dimethacrylate, trimethylolpropane trimethacrylate, 2,2-bis(p-methacryloyloxyphenyl)hexafluoropropane, 2,2-bis(m-methacryloyloxyphenyl)hexafluoropropane, 2,2-bis(o-methacryloyloxyphenyl)hexafluoropropane, 2,2-bis(p-methacryloyloxyphenyl)propane, 2,2-bis(m-methacryloyloxyphenyl)propane, 2,2-bis(o-methacryloyloxyphenyl)propane, 1,4-bis(2-methacryloyloxyhexafluoroisopropyl)benzene, 1,3-bis(2-methacryloyloxyhexafluoroisopropyl)benzene, 1,2-bis(2-methacryloyloxyhexafluoroisopropyl)benzene, 1,4-bis(2-methacryloyloxyisopropyl)benzene, 1,3-bis(2-methacryloyloxyisopropyl)benzene, 1,2-bis(2-methacryloyloxyisopropyl)benzene, and the like. These crosslinking agents may be used either alone, or as a mixture of two or more thereof.

The proportion of the crosslinking agent used is preferably no less than 0.05 parts by mass and no greater than 1 part by mass, and more preferably no less than 0.1 parts by mass and no greater than 0.8 parts by mass with respect to 100 parts by mass of the entire polymer components. When the proportion of the crosslinking agent used is no less than 0.05 parts by mass, the flexibility and the like can be certainly adjusted. In contrast, when the proportion of the crosslinking agent used is no greater than 1 part by mass, deterioration of the mechanical strength and durability of ophthalmic lens can be inhibited.

<Method for Producing Ophthalmic Lens Material>

The ophthalmic lens material can be produced with a method of polymerization and molding of an ophthalmic lens material commonly performed by persons skilled in the art. For example, 1) a method which includes allowing for polymerization in an appropriate mold or vessel in which a composition for an ophthalmic lens material was mixed to obtain a material (polymer) having a rod shape, block shape or plate shape, followed by processing to give a desired shape by mechanical processing such as cutting processing or grinding processing, 2) a method which includes providing a mold corresponding to a desired shape, allowing polymerization of a composition for an ophthalmic lens material in the mold to obtain a cured matter, and subjecting to finish processing mechanically as needed, and the like may be employed.

The ophthalmic lens material of the present invention may be produced by a method including the steps of:

(A) preparing a composition for an ophthalmic lens material containing the anthraquinone colorant or high molecular anthraquinone colorant, and a monomer (II) for an ophthalmic lens having an unsaturated double bond;
(B) introducing the composition into a mold;
(C) curing the composition by heating and/or irradiating with an ultraviolet ray the composition in the mold to obtain a cured matter;
(D) releasing the cured matter from the mold;
(E) hydrating the cured matter; and
(F) removing an unreacted material from the cured matter hydrated.

The step (A) may include two steps of: (A-1) mixing a composition containing the anthraquinone colorant of the present invention and a monomer (I) for an ophthalmic lens to obtain a high molecular anthraquinone colorant; and (A-2) mixing a composition for an ophthalmic lens material containing the high molecular anthraquinone colorant and a monomer (II) for an ophthalmic lens having an unsaturated double bond. According to the method, a high molecular anthraquinone colorant is synthesized from a single molecular anthraquinone colorant with a series of steps, thereby enabling an ophthalmic lens material that includes the high molecular anthraquinone colorant as a colorant to be produced.

In the method for the production, a high molecular anthraquinone colorant may be selected appropriate for the type of the monomer (II) for an ophthalmic lens having an unsaturated double bond that is a composition for an ophthalmic lens material. In other words, when the principal component of the monomer (II) for an ophthalmic lens having an unsaturated double bond is the monomer A having an unsaturated double bond, compatibility of the colorant with the composition can be improved by using a high molecular anthraquinone colorant in which the anthraquinone colorant of the present invention forms a covalent bond with the monomer A. The same applies to the case in which the principal component of the monomer (II) for an ophthalmic lens having an unsaturated double bond is other monomer (monomer B, monomer C, etc.).

In the present invention, in order to improve the homogeneity of the components in the composition, the composition preferably contains a water soluble organic solvent. When the water soluble organic solvent is included in a slight amount with respect to the polymerizable component, unreacted monomers can be diffused in the system also

after the polymerization reaction proceeds, thereby enabling them to participate in the polymerization reaction. In other words, the water soluble organic solvent can decrease residual polymerizable components. Furthermore, since the organic solvent used is water soluble, it can be readily replaced with water in the step of an elution treatment carried out later.

As the water soluble organic solvent, an alcohol having 1 to 4 carbon atoms such as methanol, ethanol, 1-propanol or 2-propanol, acetone, methyl ethyl ketone, dimethyl formamide, dimethyl sulfoxide, acetonitrile, N-methyl-2-pyrrolidone or the like may be used. The water soluble organic solvent may be used through selecting ad libitum one which can dissolve the polymerizable component employed, depending on the type of the polymerizable component. These may be used either alone, or as a mixture of two or more thereof.

The amount of the water soluble organic solvent used is preferably no less than 0.1% by mass and no greater than 5% by mass, and more preferably no less than 0.2% by mass and no greater than 4% by mass with respect to the composition in the entirety. When the amount of the water soluble organic solvent used is below the range described above, the amount of remaining component in polymerization tends to be increased. To the contrary, when the amount of the water soluble organic solvent used is beyond the range described above, the composition becomes nonhomogenous, whereby phase separation occurs during a polymerization reaction carried out later, and thus the resultant material may get turbid.

In the composition, a radical polymerization initiator or a photopolymerization initiator may be contained. As the radical polymerization initiator and photopolymerization initiator, those similar to the initiators suitable for the polymerization of the high molecular anthraquinone colorant described above may be exemplified.

As the material of the mold used in polymerization by way of irradiation with an ultraviolet ray, a commodity resin which can transmit the ultraviolet ray required for curing of the material such as, for example, polypropylene, polystyrene, nylon or polyester is preferred, and alternatively, glass may be also used.

Preferable ultraviolet ray illuminance when the polymer components in the mold are irradiated with an ultraviolet ray is no less than 1.0 $mW/cm^2$ for sufficiently curing the material, and is no greater than 50 $mW/cm^2$ for the purpose of preventing the material from deterioration. Also, the irradiation time is preferably 1 min or longer for sufficiently curing the material. The ultraviolet ray irradiation may be carried out in a single step, or ultraviolet rays having different illuminance may be irradiated stepwise. In addition, during the polymerization, heating may be carried out concomitantly with irradiation with an ultraviolet ray, whereby the polymerization reaction is accelerated, and thus effective molding of the ophthalmic lens is enabled.

In the case in which curing is executed by heating, the heating temperature is, in light of acceleration of the reaction, preferably no less than 25°C, more preferably no less than 30°C, whereas in light of suppression of deformation of the mold, preferably no greater than 100°C, and more preferably no greater than 90°C.

After completing the polymerization, cured matter obtained is subjected to mechanical processing such as cutting processing or grinding processing as needed. It is to be noted that the cutting may be carried out over entirety of at least one face or two both faces of the cured matter (copolymer), or on a part of at least one face or two both faces of the cured matter (copolymer). The ophthalmic lens material of the present invention is particularly preferably a cured matter (copolymer) subjected to cutting on at least one face or a part thereof, taking into consideration expansion of applications of use of the product such as a special-purpose lens. The cutting of at least one face or a part of the molded product (copolymer) as referred to means a concept including cutting of blanks obtained by polymerization with a template procedure to give a shape of a desired ophthalmic lens.

It is to be noted that the step (D) is preferably carried out while the cured matter is in a dry state without using a medium such as water. According to the method for the production, since a solvent or the like is not used, a step of operation such as removal of the solvent from the cured matter which had been released from the mold is not needed; therefore, simplification of the production step can be realized.

Furthermore, is it preferred that the step (E) of hydrating the cured matter, i.e., a step of allowing water to be contained, and the step (F) of removing an unreacted material from the cured matter hydrated be concomitantly carried out by immersing the cured matter obtained (released from the mold) in the step (D) in any one of water, a physiological saline solution, a phosphoric acid buffer and a boric acid buffer. According to the method for the production, two steps can be concomitantly carried out; therefore, simplification of the production step can be realized.

Moreover, according to the method for producing an ophthalmic lens material, by the step (G) of modifying the cured matter after the releasing step, hydrophilicity and stain resistance can be imparted to the lens surface. As the modifying process, for example, a dry process such as a plasma treatment in which the cured matter is exposed under a plasma discharge atmosphere using various types of reaction gas or inert gas, etc., corona discharge, irradiation with an ultraviolet ray such as excimer VUV, or a radioactive ray, or the like may be employed. Alternatively, as the modifying process, in addition to or in place of the aforementioned dry process, a wet process can be also employed such as a multilayer lamination method (layer-by-layer method) carried out using polyelectrolyte, a plasma treatment or the like to produce a radical active species on the surface, followed by bringing into contact with a hydrophilic monomer to permit surface graft polymerization, or the like.

<Ophthalmic Lens>

Since the colorant contained is strongly bound to other ophthalmic lens components in the ophthalmic lens material of the present invention obtained in this manner, the colorant is prevented from elution, and thus high weather resistance is provided. Therefore, the ophthalmic lens material can be suitably used for ophthalmic lenses such as, e.g., contact lenses, intraocular lenses, artificial cornea, cornea onlay, and cornea inlay.

[EXAMPLE]

Hereinafter, the present invention is explained in more detail by way of Synthesis Examples and Examples, but the present invention is not limited to the following Examples.

<Synthesis Example 1>

Synthesis of Anthraquinone Colorant 1

1,4-Dichloroanthraquinone (1.00 g), 4-aminostyrene (1.03 g) and a palladium catalyst (0.25 g) were dissolved in dimethoxy ethane (DME). Next, nitrogen gas was bubbled for 30 min. Then 60% sodium hydroxide (1.44 g) was charged thereto, and a reaction was allowed at 90°C for 3 hrs. After completing the reaction, the solvent dimethoxy ethane was distilled in vacuo. Thereto were added dichloromethane (DCM), distilled water and a saturated dietary salt liquid, followed by stirring and liquid separation. Subsequently, a DCM layer was removed, and filtered through a glass filter. Thereafter, DCM was distilled in vacuo. Then, n-hexane and acetonitrile were added thereto to permit dissolution followed by stirring and liquid separation. An acetonitrile layer was then removed, and filtered through a glass filter. Subsequently, acetonitrile was distilled in vacuo. Thereafter, purification was performed on column chromatography. The sample was dried to give 0.71 g of 1,4-bis((ethenyl phenyl)amino)-9,10-anthraquinone (anthraquinone colorant 1 represented by the above formula (2); yield: 45%). The anthraquinone colorant 1 thus obtained had a bright green color.

Measurements of the anthraquinone colorant 1 obtained in Synthesis Example 1 are as follows:

(1) wavelength of maximum absorption: 649 nm;
(2) infrared absorption spectrum as shown in Fig. 1; and
(3) NMR spectrum (solvent: chloroform -d) as shown in Fig. 2.

<Synthesis Example 2>

Synthesis of Anthraquinone Colorant 2

1,8-Dichloroanthraquinone (0.50 g), 4-aminostyrene (0.52 g) and a palladium catalyst (0.12 g) were dissolved in DME. Next, nitrogen gas was bubbled for 30 min. Then 60% sodium hydroxide (0.72 g) was charged thereto, and a reaction was allowed at 120°C for 16 hrs. After completing the reaction, the solvent DME was distilled in vacuo. Purification was performed by a process similar to that of Synthesis Example 1. The sample was dried to give 0.34 g of 1,8-bis((ethenyl phenyl)amino)-9,10-anthraquinone (anthraquinone colorant 2 represented by the above formula (3); yield: 43%). The anthraquinone colorant 2 thus obtained had a bright reddish purple color.

Measurements of the anthraquinone colorant 2 obtained in Synthesis Example 2 are as follows:

(1) wavelength of maximum absorption: 560 nm;
(2) infrared absorption spectrum as shown in Fig. 3; and
(3) NMR spectrum (solvent: chloroform -d) as shown in Fig. 4.

<Synthesis Example 3>

Synthesis of Anthraquinone Colorant 3

1-Iodoanthraquinone (0.50 g), 4-aminostyrene (0.29 g) and a palladium catalyst (0.07 g) were dissolved in DME. Next, nitrogen gas was bubbled for 30 min. Then 60% sodium hydroxide (0.82 g) was charged thereto, and a reaction was allowed at 70°C for 3 hrs. After completing the reaction, the solvent DME was distilled in vacuo. Purification was performed by a process similar to that of Synthesis Example 1. The sample was dried to give 0.29 g of 1-((ethenyl phenyl)amino)-9,10-anthraquinone (anthraquinone colorant 3 represented by the above formula (4); yield: 43%). The anthraquinone colorant 3 thus obtained had a bright red color.

Measurements of the anthraquinone colorant 3 obtained in Synthesis Example 3 are as follows:

(1) wavelength of maximum absorption: 515 nm;
(2) infrared absorption spectrum as shown in Fig. 5; and
(3) NMR spectrum (solvent: chloroform -d) as shown in Fig. 6.

<Synthesis Example 4>

Synthesis of Anthraquinone Colorant 4

1-Iodo-4-hydroxyanthraquinone (0.50 g), 4-aminostyrene (0.28 g), a palladium catalyst (0.02 g) and a chelator (0.06 g) were dissolved and/or dispersed in toluene, and nitrogen gas was bubbled for 30 min. Then caesium carbonate (3.15 g) was charged thereto, and a reaction was allowed at 120°C for 12 hrs. After completing the reaction, the solvent toluene was distillated in vacuo. DCM, water, and a saturated dietary salt liquid were added thereto followed by stirring and liquid separation. A DCM layer was removed, and filtered through a glass filter. Subsequently, DCM was distillated in vacuo. Then 4-aminostyrene remaining after the vacuum distillation was distilled off. Thereafter, purification was performed on column chromatography. The sample was dried to give 0.34 g of 1-ethenyl phenylamino-4-hydroxy-9,10-anthraquinone (anthraquinone colorant 4 represented by the above formula (5); yield: 52%). The anthraquinone colorant 4 thus obtained had a bright purple color.

Measurements of the anthraquinone colorant 4 obtained in Synthesis Example 4 are as follows:

(1) wavelength of maximum absorption: 585 nm;
(2) infrared absorption spectrum as shown in Fig. 7; and
(3) NMR spectrum (solvent: chloroform -d) as shown in Fig. 8.

<Synthesis Example 5>

Synthesis of Anthraquinone Colorant 5

1,4-Dichloroanthraquinone (0.50 g), 4-aminostyrene (0.22 g) and a palladium catalyst (0.12 g) were dissolved in DME. Next, nitrogen gas was bubbled for 30 min. Then 60% sodium hydroxide (0.72 g) was charged thereto, and a reaction was allowed at 60°C for 3 hrs. Thereafter, p-toluidine (0.23 g) was added thereto, and a reaction was allowed at 90°C for 3 hrs. After completing the reaction, the solvent DME was distillated in vacuo. Purification was performed by a process similar to that of Synthesis Example 1. The sample was dried to give 0.20 g of 1-((ethenyl phenyl)amino)-4-((4-methylphenyl)amino)-9,10-anthraquinone (anthraquinone colorant 5 represented by the above formula (6); yield: 26%). The anthraquinone colorant 5 thus obtained had a bright green color.

Measurements of the anthraquinone colorant 5 obtained in Synthesis Example 5 are as follows:

(1) wavelength of maximum absorption: 650 nm;
(2) infrared absorption spectrum as shown in Fig. 9; and
(3) NMR spectrum (solvent: chloroform -d) as shown in Fig. 10.

<Synthesis Example 6>

Synthesis of Anthraquinone Colorant 6

1,4-Dichloroanthraquinone (0.50 g), allyl p-aminophenylethyl ether (0.77 g) and a palladium catalyst (0.12 g) were dissolved in DME. Next, nitrogen gas was bubbled for 30 min. Then 60% sodium hydroxide (0.72 g) was charged thereto, and a reaction was allowed at 90°C for 3 hrs. After completing the reaction, the solvent DME was distillated in vacuo.

Purification was performed by a process similar to that of Synthesis Example 1. The sample was dried to give 0.18 g of 1,4-bis((allyloxyethylphenyl)amino)-9,10-anthraquinone (anthraquinone colorant 6 represented by the above formula (7); yield: 18%). The anthraquinone colorant 6 thus obtained had a bright green color.

Measurements of the anthraquinone colorant 6 obtained in Synthesis Example 6 are as follows:

(1) wavelength of maximum absorption: 646 nm;
(2) infrared absorption spectrum as shown in Fig. 11; and
(3) NMR spectrum (solvent: chloroform -d) as shown in Fig. 12.

<Synthesis Example 7>

Synthesis of Anthraquinone Colorant 7

1-Iodo-4-hydroxyanthraquinone (0.50 g), allyl 4-aminophenylmethyl ether (0.38 g), a palladium catalyst (0.02 g) and a chelator (0.06 g) were dissolved and/or dispersed in toluene, and nitrogen gas was bubbled for 30 min. Then caesium carbonate (3.15 g) was charged thereto, and a reaction was allowed at 120°C for 16 hrs reaction. After completing the reaction, the solvent toluene was distillated in vacuo. Thereto were added DCM, distilled water and a saturated dietary salt liquid, followed by stirring and liquid separation. Subsequently, a DCM layer was removed, and filtered through a glass filter. Subsequently, DCM was distillated in vacuo. Thereafter, purification was performed on column chromatography. The sample was dried to give 0.18 g of 1-(allyloxymethylphenyl)amino-4-hydroxy-9,10-anthraquinone (anthraquinone colorant 7 represented by the above formula (8); yield: 21%). The anthraquinone colorant 7 thus obtained had a bright purple color.

Measurements of the anthraquinone colorant 7 obtained in Synthesis Example 7 are as follows:

(1) wavelength of maximum absorption: 564 nm;
(2) infrared absorption spectrum as shown in Fig. 13; and
(3) NMR spectrum (solvent: chloroform -d) as shown in Fig. 14.

<Synthesis Example 8>

Synthesis of Anthraquinone Colorant 8

1-Iodo-4-hydroxyanthraquinone (0.50 g), allyl 4-aminophenylethyl ether (0.41 g), a palladium catalyst (0.02 g) and a chelator (0.06 g) were dissolved and/or dispersed in toluene, and nitrogen gas was bubbled for 30 min. Then caesium carbonate (3.15 g) was charged thereto, and a reaction was allowed at 120°C for 16 hrs. After completing the reaction, the solvent toluene was distillated in vacuo. Purification was performed by a process similar to that of Synthesis Example 7. The sample was dried to give 0.10 g of 1-(allyloxyethylphenyl)amino-4-hydroxy-9,10-anthraquinone (anthraquinone colorant 8 represented by the above formula (9); yield: 13%). The anthraquinone colorant 8 thus obtained had a bright purple color.

Measurements of the anthraquinone colorant 8 obtained in Synthesis Example 8 are as follows:

(1) wavelength of maximum absorption: 586 nm;
(2) infrared absorption spectrum as shown in Fig. 15; and
(3) NMR spectrum (solvent: chloroform -d) as shown in Fig. 16.

<Synthesis Example 9>

Synthesis of Anthraquinone Colorant 9

1-(4-(2-hydroxyethyl)phenyl)amino-4-hydroxyanthraquinone (0.50 g) and allyl isocyanate (0.14 g) were dissolved in toluene, a tin catalyst (0.02 g) was charged thereto, and then a reaction was allowed at 30°C for 24 hrs. After completing the reaction, the solvent toluene was distillated in vacuo. DCM, distilled water and a saturated dietary salt liquid were added thereto, followed by stirring and liquid separation. Subsequently, a DCM layer was removed, and filtered through a glass filter. DCM was then distillated in vacuo. Then, n-hexane and acetonitrile were added thereto to permit dissolution, followed by stirring and liquid separation. Next, an acetonitrile layer was removed, and filtered through a glass filter. Subsequently, acetonitrile was distillated in vacuo. Thereafter, purification was performed on column chromatography. The sample was dried to give 0.08 g of 1-(4-(2-(allylaminocarbonyloxy)ethyl)phenylamino-4-hydroxyanthraquinone (anthraquinone colorant 9 represented by the above formula (10); yield: 13%). The anthraquinone colorant 9 thus obtained had a bright purple color.

Measurements of the anthraquinone colorant 9 obtained in Synthesis Example 9 are as follows:

(1) wavelength of maximum absorption: 575 nm;
(2) infrared absorption spectrum as shown in Fig. 17; and
(3) NMR spectrum (solvent: chloroform -d) as shown in Fig. 18.

<Synthesis Example 10>

Synthesis of Anthraquinone Colorant 10

1-(4-(2-Hydroxyethyl)phenyl)amino-4-hydroxyanthraquinone (0.30 g) and triethylamine (0.17 g) were dissolved in DCM. Then methacryloyl chloride (0.09 g) was charged thereto, and a reaction was allowed at room temperature for 24 hrs. After completing the reaction, the solvent DCM was distillated in vacuo. Thereto were added DCM, water and a saturated dietary salt liquid, followed by stirring and liquid separation. Subsequently, DCM layer was removed, and filtered through a glass filter. Subsequently, DCM was distillated in vacuo. Thereafter, purification was performed on column chromatography. The sample was dried to give 0.15 g of 1-(4-(2-methacryloyloxyethyl)phenyl)amino-hydroxy-9,10-anthraquinone (anthraquinone colorant 10 represented by the above formula (11); yield: 42%). The anthraquinone colorant 10 thus obtained had a bright purple color.

Measurements of the anthraquinone colorant 10 obtained in Synthesis Example 10 are as follows:

(1) wavelength of maximum absorption: 567 nm;
(2) infrared absorption spectrum as shown in Fig. 19; and
(3) NMR spectrum (solvent: chloroform -d) as shown in Fig. 20.

Moreover, the wavelength of maximum absorption, and the hue of the resulting anthraquinone colorants 1 to 10 are shown in Table 1 below.

[Table 1]

| Anthraquinon e colorant | Wavelength of maximum absorption (nm) | Hue |
|---|---|---|
| Anthraquinone colorant 1 | 649 | green |
| Anthraquinone colorant 2 | 560 | reddish purple |
| Anthraquinone colorant 3 | 515 | red |
| Anthraquinone colorant 4 | 585 | purple |
| Anthraquinone colorant 5 | 650 | green |
| Anthraquinone colorant 6 | 646 | green |
| Anthraquinone colorant 7 | 564 | purple |
| Anthraquinone colorant 8 | 586 | purple |
| Anthraquinone colorant 9 | 575 | purple |
| Anthraquinone colorant 10 | 567 | purple |

<Synthesis Example 11>

Synthesis of High Molecular Anthraquinone Colorant 1

Two ends of polydimethylsiloxane-co-hydromethylsiloxane (Mn = 7,600; polystyrene equivalent, Si-Me: Si-H = 90:10) were both capped with allyl alcohol, and then isocyanateethyl methacrylate to obtain a siloxane compound having an unsaturated double bond and a polydimethylsiloxane structure. The siloxane compound in an amount of 2.28 g (0.30 mmol) and 0.10 g (0.30 mmol) of the anthraquinone colorant 4 were dissolved in 40 mL of toluene, and the mixture was stirred at room temperature for 30 min while bubbling inert gas (nitrogen). Thereafter 20μL of a platinum catalyst was added to the solution, and a reaction was allowed at a temperature of no less than 60°C for 20 hrs or longer. To the resulting solution was added 50 mL of distilled water and the mixture was heated at 100°C for 2 hrs. After the reaction solvent was distilled off, dichloromethane (200 mL), distilled water (100 mL) and a saturated dietary salt liquid (100 mL) were added thereto, and the mixture was stirred. A dichloromethane layer separated with a separatory funnel was recovered, and filtered through a glass filter. Again, washing was carried out with distilled water (100 mL) and a saturated dietary salt liquid (100 mL), and a dichloromethane layer was recovered, which was filtered through a glass filter to eliminate the catalyst. Thereafter, dichloromethane was distilled off, and thereto was added 300 mL of n-hexane to permit redissolution. Washing with acetonitrile was repeated, and the resulting n-hexane layer was filtered, followed by

distilling off n-hexane to obtain 1.09 g of an oily high molecular anthraquinone colorant 1 (the above formula (13); yield: 46%).

<Synthesis Example 12>

Synthesis of High Molecular Anthraquinone Colorant 2

Polydimethylsiloxane-co-hydromethylsiloxane (Mn = 7,000; polystyrene equivalent, Si-Me: Si-H = 70: 30) in an amount of 2.10 g (0.30 mmol) and 0.31 g (0.90 mmol) of the anthraquinone colorant 4 were dissolved in 120 mL of toluene, and the mixture was stirred at room temperature for 30 min while bubbling inert gas (nitrogen). Thereafter, 50 μL of a platinum catalyst was added to the solution, and the mixture was stirred at a temperature no less than 60°C for 20 hrs or longer to allow for a reaction. The operation of the purification step after completing the reaction was carried out in accordance with Synthesis Example 11 to obtain 1.39 g of an oily high molecular anthraquinone colorant 2 (the above formula (14); yield: 58%).

<Synthesis Example 13>

Synthesis of High Molecular Anthraquinone Colorant 3

Into 2,000 parts by mass of N-methyl-2-pyrrolidone were added 4.95 parts by mass of the anthraquinone colorant 4, 25.06 parts by mass of 2-hydroxyethyl methacrylate, 72.05 parts by mass of TRIS (tris(trimethylsiloxy) silylpropyl methacrylate) and 2.0 parts by mass of azobisisobutyronitrile, and the mixture was stirred at 78 to 80°C for 8 hrs. After cooling, the mixture was placed into 10,000 parts by mass of water, and the precipitate thus obtained was filtrated. The precipitate was sequentially washed with water and methanol, followed by drying to obtain 56.1 parts by mass of a high molecular anthraquinone colorant 3 (hue: blue) that is a copolymer of the anthraquinone colorant 4, 2-hydroxyethyl methacrylate and TRIS (yield: 55%).

<Synthesis Example 14>

Synthesis of Macromonomer A

Into a 1 L three-neck flask equipped with a Dimroth condenser tube, a mechanical agitator and a thermometer at a side tube which had been substituted with nitrogen beforehand were added 75.48 g (0.34 mol) of isophoronediisocyanate (IPDI) and 0.12 g of ironacetyl acetonate (FeAA). Then, 529.90 g of hydroxyl group-dual ended dimethylsiloxane (degree of polymerization: 40; hydroxyl group equivalent 1,560 g/mol, manufactured by Shin-Etsu Chemical Co., Ltd., KF-6002, hereinafter, referred to as "DHDMSi 40") was added thereto, and the mixture was stirred in an oil bath heated to 80°C for about 4 hrs.

Next, 39.47 g (0.34 mol) of 2-hydroxyethyl acrylate (HEA), and 0.20 g of p-methoxyphenol (MEHQ) as a polymerization inhibitor were added to the three-neck flask, and the mixture was stirred in an oil bath at 80°C. About 3 hrs later, the reaction was confirmed using $^1$H-NMR and FT/IR from the reaction mixture to determine that a predetermined compound was obtained. Furthermore, a crude compound was extracted and washed with n-hexane and acetonitrile, and a n-hexane layer was recovered. The organic solvent and low molecular compounds were distilled off under a reduced pressure to obtain 522.33 g of a purified compound (macromonomer A (the above formula (22), yield: 81%). The results of an analysis are as shown below.

$^1$H-NMR (in $CDCl_3$) ; δ0.06 ppm (Si-$CH_3$, m), 0.52 (Si-$CH_2$, 2H, m), 2.91 (NH-$CH_2$, 2H, d), 3.02 ($CH_2$-N=C=O, 2H, s), 3.42 (-O-$CH_2$, 2H, t), 3.61 (-O-$CH_2$, 2H, m), 4.18-4.34 (-(O)CO-$CH_2$-, 6H, m), 4.54 (NH, 1H, s), 4.85 (NH, 1H, s), 5.84 (CH=, 1H, dd), 6.14 (CH=, 1H, dd), 6.43 (CH=, 1H, dd) FT/IR; 1,262 and 802 $cm^{-1}$ (Si-$CH_3$), 1,094 and 1,023 (Si-O-Si), 1,632 (C=C) around 1,728 (C=O, ester and urethane)

<Components Used>

Meanings of abbreviations used in the following Examples are as indicated below.

- Green 6: 1,4-bis(p-methylphenylamino)anthraquinone
- Violet 2: 1-(p-methylphenylamino)-4-hydroxyanthraquinone
- Macromonomer A (macromonomer in which a polydimethylsiloxane structure and a unsaturated double bond are present via a urethane bond): a compound represented by the above general formula (23) synthesized in Synthesis Example 14

- TRIS: tris(trimethylsiloxy)silylpropyl methacrylate
- DMAA: N,N-dimethylacrylamide
- N-VP: N-vinylpyrrolidone
- 2-MTA: 2-methoxyethyl acrylate
- 2-HEMA: 2-hydroxyethyl methacrylate
- AMA: allyl methacrylate
- EDMA: ethylene glycol dimethacrylate
- HMPPO: 2-hydroxy-2-methyl-1-phenylpropane-1-one
- AIBN: 2,2'-azobisisobutyronitrile

[Example 1]

A composition for an ophthalmic lens material was prepared which contains: as a colorant 0.02 parts by mass of the anthraquinone colorant 1 synthesized in the Synthesis Example; as a monomer for an ophthalmic lens 30.0 parts by mass of the macromonomer A; 25.0 parts by mass of TRIS, 15.0 parts by mass of DMAA and 30.0 parts by mass of N-VP; as a crosslinking agent 0.4 parts by mass of EDMA,; and as a polymerization initiator 0.4 parts by mass of HMPPO. The composition was injected into a mold (made from polypropylene; corresponding to a contact lens having a diameter of about 14 mm and a thickness of 0.1 mm) having a shape of a contact lens, and then this mold was irradiated with an ultraviolet ray for 20 min to carry out photopolymerization. After completing the polymerization, a cured matter having the shape of a contact lens was obtained from the mold, and subjected to a hydration treatment by immersing in a physiological saline solution thereby allowing for absorption of the moisture to obtain a material for an ophthalmic lens of Example 1.

[Example 2]

A material for an ophthalmic lens of Example 2 was obtained in a similar manner to Example 1 described above except that 0.02 parts by mass of the anthraquinone colorant 4 synthesized in the Synthesis Example described above were used as the colorant.

[Example 3]

A material for an ophthalmic lens of Example 3 was obtained in a similar manner to Example 1 described above except that 0.02 parts by mass of the anthraquinone colorant 6 synthesized in the Synthesis Example described above were used as the colorant.

[Example 4]

A material for an ophthalmic lens of Example 4 was obtained in a similar manner to Example 1 described above except that 0.02 parts by mass of the anthraquinone colorant 8 synthesized in the Synthesis Example described above were used as the colorant.

[Example 5]

A material for an ophthalmic lens of Example 5 was obtained in a similar manner to Example 1 described above except that 0.02 parts by mass of the anthraquinone colorant 10 synthesized in the Synthesis Example described above were used as the colorant.

[Example 6]

A material for an ophthalmic lens of Example 6 was obtained in a similar manner to Example 1 except that as the colorant 0.02 parts by mass of the high molecular anthraquinone colorant 1 synthesized in the Synthesis Example described above were used.

[Example 7]

A material for an ophthalmic lens of Example 7 was obtained in a similar manner to Example 1 except that 0.02 parts by mass of the high molecular anthraquinone colorant 2 synthesized in the Synthesis Example described above was used as a colorant.

[Example 8]

An ophthalmic lens material of Example 8 was obtained in a similar manner to Example 1 except that a composition for an ophthalmic lens material was prepared which contains as the colorant 0.02 parts by mass of the anthraquinone colorant 1 synthesized in the Synthesis Example described above, as the monomer for an ophthalmic lens 10.0 parts by mass of the macromonomer A, 25.0 parts by mass of TRIS, 40.0 parts by mass of N-VP and 25 parts by mass of 2-MTA, as the crosslinking agent 0.4 parts by mass of AMA, and as the polymerization initiator 0.4 parts by mass of HMPPO.

[Example 9]

An ophthalmic lens material of Example 9 was obtained in a similar manner to Example 8 described above except that 0.02 parts by mass of the anthraquinone colorant 4 synthesized in the Synthesis Example described above were used as the colorant.

[Example 10]

An ophthalmic lens material of Example 10 was obtained in a similar manner to Example 8 described above except that 0.02 parts by mass of the anthraquinone colorant 6 synthesized in the Synthesis Example described above were used as the colorant.

[Example 11]

An ophthalmic lens material of Example 11 was obtained in a similar manner to Example 8 described above except that 0.02 parts by mass of the anthraquinone colorant 8 synthesized in the Synthesis Example described above were used as the colorant.

[Example 12]

An ophthalmic lens material of Example 12 was obtained in a similar manner to Example 8 described above except that 0.02 parts by mass of the anthraquinone colorant 10 synthesized in the Synthesis Example described above were used as the colorant.

[Example 13]

An ophthalmic lens material of Example 13 was obtained in a similar manner to Example 8 described above except that 0.02 parts by mass of the high molecular anthraquinone colorant 1 synthesized in the Synthesis Example described above were used as the colorant.

[Example 14]

An ophthalmic lens material of Example 14 was obtained in a similar manner to Example 8 described above except that 0.02 parts by mass of the high molecular anthraquinone colorant 2 synthesized in the Synthesis Example described above were used as the colorant.

[Example 15]

An ophthalmic lens material of Example 15 was obtained in a similar manner to Example 1 except that a composition for an ophthalmic lens material was prepared which contains as the colorant 0.02 parts by mass of the anthraquinone colorant 1 synthesized in the Synthesis Example described above, as the monomer for an ophthalmic lens, 15.0 parts by mass of N-VP and 85.0 parts by mass of 2-HEMA, as the crosslinking agent 1.0 part by mass of AMA and 1.0 part by mass of EDMA, and as the polymerization initiator 0.4 parts by mass of HMPPO. It is to be noted that each monomer for an ophthalmic lens used in Example 15 does not have a polydimethylsiloxane structure.

[Example 16]

An ophthalmic lens material of Example 16 was obtained in a similar manner to Example 15 described above except that 0.02 parts by mass of the anthraquinone colorant 4 synthesized in the Synthesis Example described above

were used as the colorant.

[Example 17]

An ophthalmic lens material of Example 17 was obtained in a similar manner to Example 15 described above except that 0.02 parts by mass of the anthraquinone colorant 6 synthesized in the Synthesis Example described above were used as the colorant.

[Example 18]

An ophthalmic lens material of Example 18 was obtained in a similar manner to Example 15 described above except that 0.02 parts by mass of the anthraquinone colorant 8 synthesized in the Synthesis Example described above were used as the colorant.

[Example 19]

An ophthalmic lens material of Example 19 was obtained in a similar manner to Example 15 described above except that 0.02 parts by mass of the anthraquinone colorant 10 synthesized in the Synthesis Example described above were used as the colorant.

[Example 20]

A composition for an ophthalmic lens material was prepared which contains: as a colorant 0.02 parts by mass of the anthraquinone colorant 1 synthesized in the Synthesis Example; as a monomer for an ophthalmic lens 30.0 parts by mass of the macromonomer A; 25.0 parts by mass of TRIS, 15.0 parts by mass of DMAA and 30.0 parts by mass of N-VP; as a crosslinking agent 0.4 parts by mass of EDMA,; and as a polymerization initiator 0.4 parts by mass of AIBN. The composition was injected into a mold (made from polypropylene; corresponding to a contact lens having a diameter of about 14 mm and a thickness of 0.1 mm) having a shape of a contact lens, and then this mold was subjected to thermal polymerization in a dryer regulated to a temperature of 90°C for 60 min. After completing the polymerization, a polymer having the shape of a contact lens was obtained from the mold, and subjected to a hydration treatment by immersing in a physiological saline solution thereby allowing for absorption of the moisture to obtain a material for an ophthalmic lens of Example 20.

[Comparative Example 1]

An ophthalmic lens material of Comparative Example 1 was obtained in a similar manner to Example 1 except that 0.02 parts by mass of Green 6 were used as the colorant.

[Comparative Example 2]

An ophthalmic lens material of Comparative Example 2 was obtained in a similar manner to Example 1 except that 0.02 parts by mass of Violet 2 were used as the colorant.

[Comparative Example 3]

An ophthalmic lens material of Comparative Example 3 was obtained in a similar manner to Example 8 except that 0.02 parts by mass of Green 6 were used as the colorant.

[Comparative Example 4]

An ophthalmic lens material of Comparative Example 4 was obtained in a similar manner to Example 8 except that 0.02 parts by mass of Violet 2 were used as the colorant.

[Comparative Example 5]

An ophthalmic lens material of Comparative Example 5 was obtained in a similar manner to Example 15 except that 0.02 parts by mass of Green 6 were used as the colorant.

[Comparative Example 6]

An ophthalmic lens material of Comparative Example 6 was obtained in a similar manner to Example 15 except that 0.02 parts by mass of Violet 2 were used as the colorant.

It is to be noted that the amount (parts by mass) of the blended components the compositions of Examples 1 to 20 and Comparative Examples 1 to 6 are again shown in Table 2 to Table 5 below.

[Table 2]

| Component | Example | | | | | | |
|---|---|---|---|---|---|---|---|
| | 1 | 2 | 3 | 4 | 5 | 6 | 7 |
| Anthraquinone colorant 1 | 0. 02 | - | - | - | - | - | - |
| Anthraquinone colorant 4 | - | 0. 02 | - | - | - | - | - |
| Anthraquinone colorant 6 | - | - | 0. 02 | - | - | - | - |
| Anthraquinone colorant 8 | - | - | - | 0. 02 | - | - | - |
| Anthraquinone colorant 10 | - | - | - | - | 0.02 | - | - |
| High molecular anthraquinone colorant 1 | - | - | - | - | - | 0. 02 | - |
| High molecular anthraquinone colorant 2 | - | - | - | - | - | - | 0. 02 |
| Green 6 | - | - | - | - | - | - | - |
| Violet 2 | - | - | - | - | - | - | - |
| macromonomer A | 30 .0 | 30 .0 | 30 .0 | 30 .0 | 30.0 | 30 .0 | 30 .0 |
| TRIS | 25 .0 | 25 .0 | 25 .0 | 25 .0 | 25.0 | 25 .0 | 25 .0 |
| DMAA | 15 .0 | 15 .0 | 15 .0 | 15 .0 | 15.0 | 15 .0 | 15 .0 |
| N-VP | 30 .0 | 30 .0 | 30 .0 | 30 .0 | 30.0 | 30 .0 | 30 .0 |
| 2-MTA | - | - | - | - | - | - | - |
| 2-HEMA | - | - | - | - | - | - | - |
| AMA | - | - | - | - | - | - | - |
| EDMA | 0.4 | 0.4 | 0.4 | 0.4 | 0.4 | 0.4 | 0.4 |
| HMPPO | 0.4 | 0.4 | 0.4 | 0.4 | 0.4 | 0.4 | 0.4 |
| AIBN | - | - | - | - | - | - | - |

[Table 3]

| Component | Example | | | | | | |
|---|---|---|---|---|---|---|---|
| | 8 | 9 | 10 | 11 | 12 | 13 | 14 |
| Anthraquinone colorant 1 | 0. 02 | | - | - | - | - | - |
| Anthraquinone colorant 4 | - | 0. 02 | - | - | - | - | - |
| Anthraquinone colorant 6 | - | - | 0. 02 | - | - | - | - |
| Anthraquinone colorant 8 | - | - | - | 0. 02 | - | - | - |
| Anthraquinone colorant 10 | - | - | - | - | 0.02 | - | - |
| High molecular anthraquinone colorant 1 | - | - | - | - | - | 0. 02 | - |
| High molecular anthraquinone colorant 2 | - | - | - | - | - | - | 0. 02 |

(continued)

| Component | Example | | | | | | |
|---|---|---|---|---|---|---|---|
| | 8 | 9 | 10 | 11 | 12 | 13 | 14 |
| Green 6 | - | - | - | - | - | - | - |
| Violet 2 | - | - | - | - | - | - | - |
| Macromonomer A | 10 .0 | 10 .0 | 10 .0 | 10 .0 | 10.0 | 10 .0 | 10 .0 |
| TRIS | 25 .0 | 25 .0 | 25 .0 | 25 .0 | 25.0 | 25 .0 | 25 .0 |
| DMAA | - | - | - | - | - | - | - |
| N-VP | 40 .0 | 40 .0 | 40 .0 | 40 .0 | 40.0 | 40 .0 | 40 .0 |
| 2-MTA | 25 .0 | 25 .0 | 25 .0 | 25 .0 | 25.0 | 25 .0 | 25 .0 |
| 2-HEMA | - | - | - | - | - | - | - |
| AMA | 0.4 | 0.4 | 0.4 | 0.4 | 0.4 | 0.4 | 0.4 |
| EDMA | - | - | - | - | - | - | - |
| HMPPO | 0.4 | 0.4 | 0.4 | 0.4 | 0.4 | 0.4 | 0.4 |
| AIBN | - | - | - | - | - | - | - |

[Table 4]

| Component | Example | | | | | |
|---|---|---|---|---|---|---|
| | 15 | 16 | 17 | 18 | 19 | 20 |
| Anthraquinone colorant 1 | 0. 02 | - | - | - | - | 0.02 |
| Anthraquinone colorant 4 | - | 0. 02 | - | - | - | - |
| Anthraquinone colorant 6 | - | - | 0. 02 | - | - | - |
| Anthraquinone colorant 8 | - | - | - | 0. 02 | - | - |
| Anthraquinone colorant 10 | - | - | - | - | 0. 02 | - |
| High molecular anthraquinone colorant 1 | - | - | - | - | - | - |
| High molecular anthraquinone colorant 2 | - | - | - | - | - | - |
| Green 6 | - | - | - | - | - | - |
| Violet 2 | - | - | - | - | - | - |
| Macromonomer A | - | - | - | - | - | 30.0 |
| TRIS | - | - | - | - | - | 25.0 |
| DMAA | - | - | - | - | - | 15.0 |
| N-VP | 15 .0 | 15 .0 | 15 .0 | 15 .0 | 15 .0 | 30.0 |
| 2-MTA | - | - | - | - | - | - |
| 2-HEMA | 85 .0 | 85 .0 | 85 .0 | 85 .0 | 85 .0 | - |
| AMA | 1.0 | 1.0 | 1.0 | 1.0 | 1.0 | - |
| EDMA | 1.0 | 1.0 | 1.0 | 1.0 | 1.0 | 0.4 |
| HMPPO | 0.4 | 0.4 | 0.4 | 0.4 | 0.4 | - |
| AIBN | - | - | - | - | - | 0.4 |

[Table 5]

| Component | Comparative Example | | | | | |
|---|---|---|---|---|---|---|
| | 1 | 2 | 3 | 4 | 5 | 6 |
| Anthraquinone colorant 1 | - | - | - | - | - | - |
| Anthraquinone colorant 4 | - | - | - | - | - | - |
| Anthraquinone colorant 6 | - | - | - | - | - | - |
| Anthraquinone colorant 8 | - | - | - | - | - | - |
| Anthraquinone colorant 10 | - | - | - | - | - | - |
| High molecular anthraquinone colorant 1 | - | - | - | - | - | - |
| High molecular anthraquinone colorant 2 | - | - | - | - | - | - |
| Green 6 | 0.02 | - | 0.02 | - | 0.02 | - |
| Violet 2 | - | 0.02 | - | 0.02 | - | 0.02 |
| Macromonomer A | 30.0 | 30.0 | 10.0 | 10.0 | - | - |
| TRIS | 25.0 | 25.0 | 25.0 | 25.0 | - | - |
| DMAA | 15.0 | 15.0 | - | - | - | - |
| N-VP | 30.0 | 30.0 | 40.0 | 40.0 | 15.0 | 15.0 |
| 2-MTA | - | - | 25.0 | 25.0 | - | - |
| 2-HEMA | - | - | - | - | 85.0 | 85.0 |
| AMA | - | - | 0.4 | 0.4 | 1.0 | 1.0 |
| EDMA | 0.4 | 0.4 | - | - | 1.0 | 1.0 |
| HMPPO | 0.4 | 0.4 | 0.4 | 0.4 | 0.4 | 0.4 |
| AIBN | - | - | - | - | - | - |

<Evaluations>

The appearance, the specific of lens, the absorbance and the extraction rate of each material for an ophthalmic lens obtained in Examples 1 to 20 and Comparative Examples 1 to 6 described above were evaluated as in the following. The results are shown in Table 6 to Table 9. It is to be noted that "-" in Tables denote that the measurement was not conducted.

(1) Appearance

The appearance (color, transparency, presence/absence of unwanted substances, presence/absence of deformation) of the colored contact lens obtained were determined by visual inspection.

(2) Specific of Lens

Diameters of three lenses were measured in a commercially available preservative liquid adjusted to 20°C.

(3) Measurement of Absorbance

A visible absorption spectrum of the lens was obtained using an integrating sphere, and λmax of absorb based on the colorant was determined.

(4) Extraction Rate

In order to ascertain the elution profile of the colorant from the lens (polymerizability of the colorant), the contact lens was immersed in 2 mL of eye discharge components (wax ester), or 2 mL of acetone, and extraction was carried out at room temperature for 24 hrs, and the absorption derived from the colorant before and after extraction was determined with an ultraviolet-visible spectrophotometer. Upon the measurement, the apparatus and an integrating sphere for measurement of lenses described in the section (3) above were used. With respect to the peak derived from each colorant, the extraction rate was determined using a maximum absorbance in accordance with the following formula. It is to be noted that in each of the extraction tests by means of a wax ester or acetone, three lenses were used, and the extraction rate was determined on respective lenses according to the following formula. The average values are shown in Tables.

Extraction rate (%) = {((absorbance before extraction) - (absorbance after extraction))/ (absorbance before extraction)} x 100

It should be noted that a lower extraction rate indicates less elution of the colorant achievable from the lens.

[Table 6]

| | | Example | | | | | | |
|---|---|---|---|---|---|---|---|---|
| | | 1 | 2 | 3 | 4 | 5 | 6 | 7 |
| Appearance (Finished lens) | Color | pale blue-green | pale purple | pale blue-green | pale purple | pale blue-green | pale purple | pale purple |
| | Transparency | favorable | favorable | favorable | favorable | favorable | favorable | favorable |
| | Unwanted substance | not found | not found | not found | not found | not found | not found | not found |
| | Deformation | not found | not found | not found | not found | not found | not found | not found |
| Specific of lens n = 3 | Diameter | nothing abnormal detected | nothing abnormal detected | nothing abnormal detected | nothing abnormal detected | nothing abnormal detected | nothing abnormal detected | nothing abnormal detected |
| λmax (nm) n = 3 | Lens | 645 | 584 | 649 | 582 | 585 | 576 | 577 |
| Extraction rate (%) n = 3 | Acetone | 12.6 | 6.5 | 14.6 | 2.9 | 1.8 | 9.0 | 5.5 |
| | Wax ester | 6.7 | 0.0 | 11.0 | 2.9 | - | 10.8 | 7.3 |

[Table 7]

| | | Example | | | | | | |
|---|---|---|---|---|---|---|---|---|
| | | 8 | 9 | 10 | 11 | 12 | 13 | 14 |
| Appearance (Finished lens) | Color | pale blue-green | pale purple | pale blue-green | pale purple | pale blue-green | pale purple | pale purple |
| | Transparency | favorable | favorable | favorable | favorable | favorable | favorable | favorable |
| | Unwanted substance | not found | not found | not found | not found | not found | not found | not found |
| | Deformation | not found | not found | not found | not found | not found | not found | not found |
| Specific of lens n = 3 | Diameter | nothing abnormal detected | nothing abnormal detected | nothing abnormal detected | nothing abnormal detected | nothing abnormal detected | nothing abnormal detected | nothing abnormal detected |
| λmax (nm) n = 3 | Lens | 647 | 582 | 648 | 583 | 582 | 580 | 565 |
| Extraction rate (%) n = 3 | Acetone | 18.8 | 20.7 | 56.7 | 27.0 | 4.0 | 21.3 | 4.9 |
| | Wax ester | 12.5 | 6.7 | 27.9 | 1.9 | - | 4.2 | 3.9 |

[Table 8]

| | | Example | | | | | |
|---|---|---|---|---|---|---|---|
| | | 15 | 16 | 17 | 18 | 19 | 20 |
| Appearance (Finished lens) | Color | pale blue-green | pale purple | pale blue-green | pale purple | pale blue-green | pale purple |
| | Transparency | favorable | favorable | favorable | favorable | favorable | favorable |
| | Unwanted substance | not found | not found | not found | not found | not found | not found |
| | Deformation | not found | not found | not found | not found | not found | not found |
| Specific of lens n = 3 | Diameter | nothing abnormal detected | nothing abnormal detected | nothing abnormal detected | nothing abnormal detected | nothing abnormal detected | nothing abnormal detected |
| λmax (nm) n = 3 | Lens | 648 | 583 | 652 | 581 | 583 | 648 |
| Extraction rate (%) n = 3 | Acetone | 11.1 | 28.3 | 24.3 | 58.5 | 8.7 | 14.3 |
| | Wax ester | 12.0 | 27.6 | 29.3 | 15.4 | 7.8 | 9.4 |

[Table 9]

| | | Comparative Example | | | | | |
|---|---|---|---|---|---|---|---|
| | | 1 | 2 | 3 | 4 | 5 | 6 |
| Appearance (Finished lens) | Color | pale blue-green | pale reddish purple | pale purple | pale blue-green | pale purple | pale purple |
| | Transparency | favorable | favorable | favorable | favorable | favorable | favorable |
| | Unwanted substance | not found | not found | not found | not found | not found | not found |
| | Deformation | not found | not found | not found | not found | not found | not found |
| Specific of lens n = 3 | Diameter | nothing abnormal detected | nothing abnormal detected | nothing abnormal detected | nothing abnormal detected | nothing abnormal detected | nothing abnormal detected |
| λmax (nm) n = 3 | Lens | 641 | 577 | 647 | 583 | 648 | 567 |
| Extraction rate (%) n = 3 | Acetone | 98.1 | 67.6 | 92.7 | 79.3 | 98.0 | 94.6 |
| | Wax ester | 97.1 | 55.6 | 82.9 | 28.7 | 91.2 | 61.4 |

As demonstrated by way of Examples, the wavelength of maximum absorption, i.e., λmax, of the materials for an ophthalmic lens produced using the anthraquinone colorants or the high molecular anthraquinone colorants of Examples 1 to 20 as a colorant exhibited a small difference from the wavelength of maximum absorption, i.e., λmax, of the included colorants themselves, indicating that there is almost no difference in hues before and after the polymerization. Moreover, the materials for an ophthalmic lens of Examples 1 to 20 had extremely low extraction rate by means of acetone and a wax ester as compared with the material for an ophthalmic lens of Comparative Examples 1 to 6, suggesting that the colorant forms strong binding or interaction with other lens component.

[INDUSTRIAL APPLICABILITY]

Since the anthraquinone colorant of the present invention can strongly bind to other monomer, it can be used as a colorant of ophthalmic lens materials. The ophthalmic lens material can be suitably used for ophthalmic lenses such as e.g., contact lenses, intraocular lens, artificial cornea, cornea onlay, cornea inlay.

## Claims

1. An anthraquinone colorant for coloring an ophthalmic lens, the colorant being represented by the following general formula (1) :

[chemical formula 1]

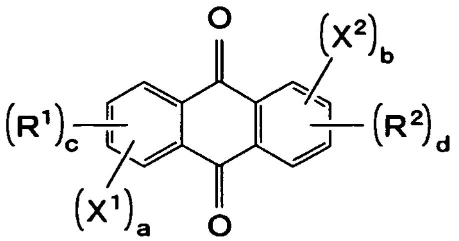

(1)

in the formula (1),
$X^1$ and $X^2$ each independently represent a group represented by the formula of:

[chemical formula 2]

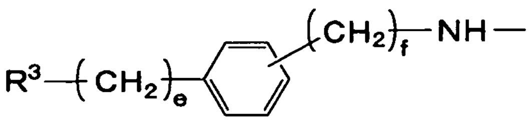

$R^1$ and $R^2$ each independently represent $-NH_2$, -OH, $-SO_3H$, $-NO_2$, -F, - Cl, -Br, -I, a Cl to C4 lower alkyl group, a Cl to C4 lower alkylamino group, a Cl to C4 lower alkoxy group, a Cl to C4 lower alkylamide group, or a group represented by the formula of:

[chemical formula 3]

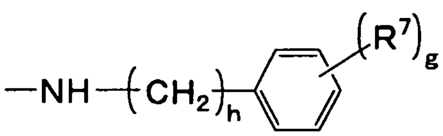

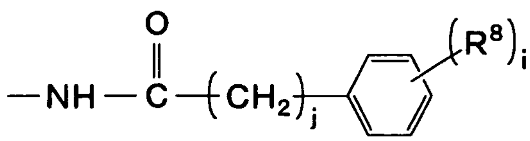

, or

$R^3$ each independently represents a group represented by:

[chemical formula 4]

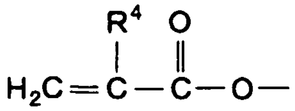, 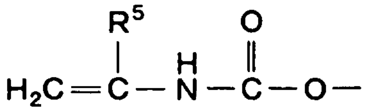,

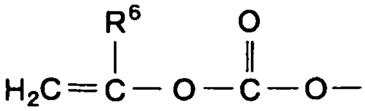, 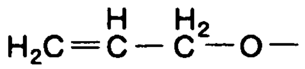,

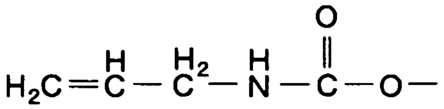, 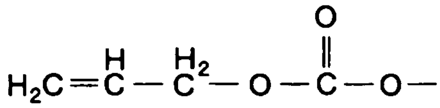,

or

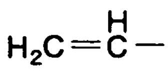

$R^4$, $R^5$ and $R^6$ each independently represent -H or $-CH_3$; $R^7$ and $R^8$ each independently represent -H, $-NH_2$, -OH, $-SO_3H$, $-NO_2$, -F, -Cl, -Br, -I, a Cl to C4 lower alkyl group, a Cl to C4 lower alkylamino group, a Cl to C4 lower alkoxy group or a Cl to C4 lower alkylamide group;
a is 1 or 2; b is an integer of 0 to 2; c is an integer of 0 to 3; d is an integer of 0 to 4; wherein, a, b, c and d satisfy the relational expression of: $a + c \leq 4$, $b + d \leq 4$; e and f are each independently an integer of 0 to 4; g and i are each independently an integer of 0 to 5; and h and j are each independently an integer of 0 to 4.

2. A high molecular anthraquinone colorant for coloring an ophthalmic lens, the colorant being obtained by forming a covalent bond between the anthraquinone colorant according to claim 1, and a monomer (I) for an ophthalmic lens.

3. The high molecular anthraquinone colorant according to claim 2, wherein the monomer (I) for an ophthalmic lens has a polydimethylsiloxane structure.

4. The high molecular anthraquinone colorant according to claim 2 or 3, which is a polymer of the monomer (I) for an ophthalmic lens, and the anthraquinone colorant.

5. The high molecular anthraquinone colorant according to claim 4, wherein the monomer (I) for an ophthalmic lens is at least one selected from the group consisting of a (meth)acrylic acid derivative, a styrene derivative, an allyl group-containing compound, a vinyl group-containing compound and an exo-methylene group-containing compound.

6. The high molecular anthraquinone colorant according to any one of claims 2 to 5, which has an unsaturated double bond.

7. An ophthalmic lens material formed from a composition comprising the anthraquinone colorant according to claim 1 or the high molecular anthraquinone colorant any one of claims 2 to 6, and a monomer (II) for an ophthalmic lens having an unsaturated double bond, and
the lens material containing a polymer comprising the monomer (II) for an ophthalmic lens as a monomer unit.

8. The ophthalmic lens material according to claim 7, wherein the polymer comprises a copolymer of the anthraquinone colorant or high molecular anthraquinone colorant, and the monomer (II) for an ophthalmic lens.

9. The ophthalmic lens material according to claim 7 or 8, wherein the monomer (II) for an ophthalmic lens has a polydimethylsiloxane structure.

10. The ophthalmic lens material according to claim 9, wherein in the monomer (II) for an ophthalmic lens, the polydimethylsiloxane structure and the unsaturated double bond are included via an urethane bond.

11. The ophthalmic lens material according to any one of claims 7 to 10, wherein the monomer (II) for an ophthalmic lens is at least one selected from the group consisting of a (meth)acrylic acid derivative, a styrene derivative, an allyl group-containing compound, a vinyl group-containing compound and an exo-methylene group-containing compound.

12. The ophthalmic lens material according to any one of claims 7 to 11, wherein the monomer (II) for an ophthalmic lens is hydrophilic.

13. A method for producing an ophthalmic lens material, the method comprising the steps of:

(A) preparing a composition for an ophthalmic lens material containing the anthraquinone colorant according to claim 1 or the high molecular anthraquinone colorant according to any one of claims 2 to 6, and the monomer (II) for an ophthalmic lens having an unsaturated double bond;
(B) transferring the composition into a mold;
(C) curing the composition in the mold by irradiating with an ultraviolet ray and/or heating the composition to obtain a cured matter;
(D) releasing the cured matter from the mold;
(E) hydrating the cured matter; and
(F) removing an unreacted material from the cured matter hydrated.

14. The method for producing an ophthalmic lens material according to claim 13, wherein the step (D) is carried out without using a medium, as the cured matter is in a dry state.

15. The method for producing an ophthalmic lens material according to claim 13 or 14, wherein the step (E) and the step (F) are concomitantly carried out by immersing the cured matter obtained in the step (D) in water, a physiological saline solution, a phosphoric acid buffer or a boric acid buffer.

16. The method for producing an ophthalmic lens material according to any one of claims 13 to 15, wherein the monomer (II) for an ophthalmic lens has a polydimethylsiloxane structure.

17. The method for producing an ophthalmic lens material according to any one of claims 13 to 16, wherein the monomer (II) for an ophthalmic lens is hydrophilic.

18. The method for producing an ophthalmic lens material according to any one of claims 13 to 17, wherein the method further comprises

(G) modifying the cured matter after the releasing step.

19. The method for producing an ophthalmic lens material according to claim 18, wherein the step (G) comprises the process of
exposing the cured matter under a plasma discharge atmosphere;
subjecting the cured matter to surface graft polymerization; or
irradiating with an ultraviolet ray or a radioactive ray.

20. An ophthalmic lens colored with the anthraquinone colorant according to claim 1, or the high molecular anthraquinone colorant according to any one of claims 2 to 6.

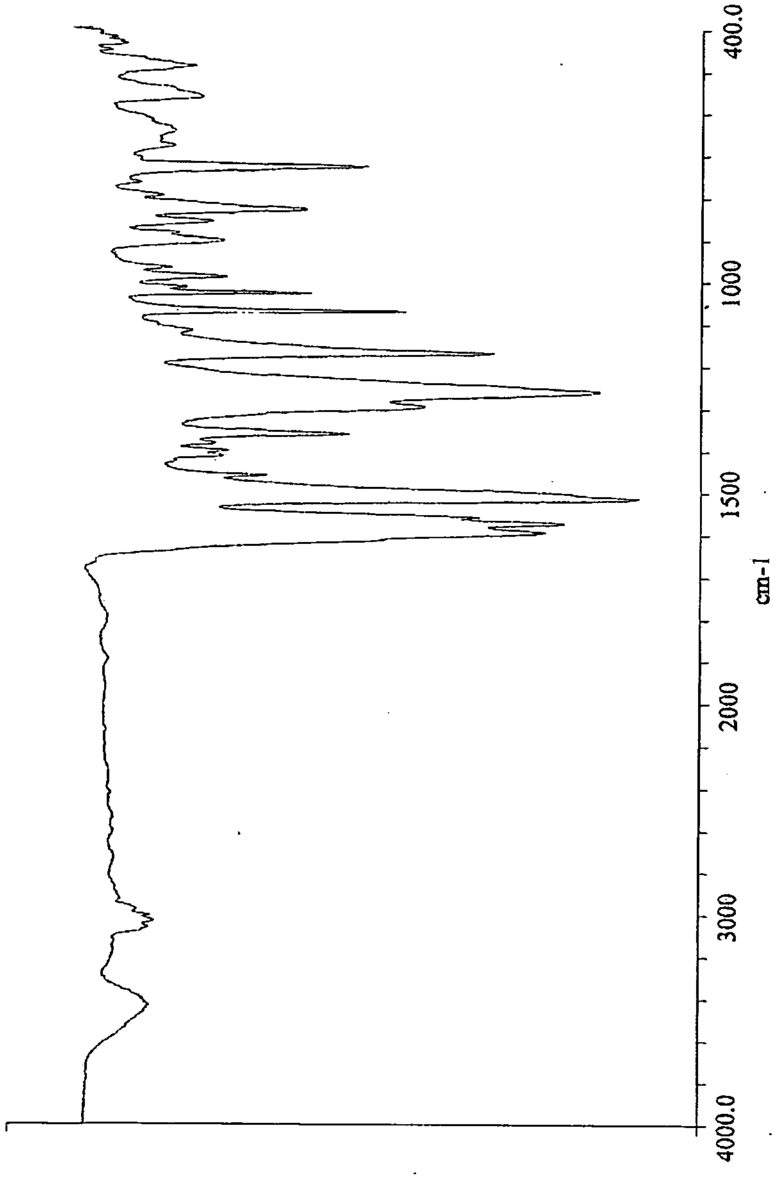


Fig. 1

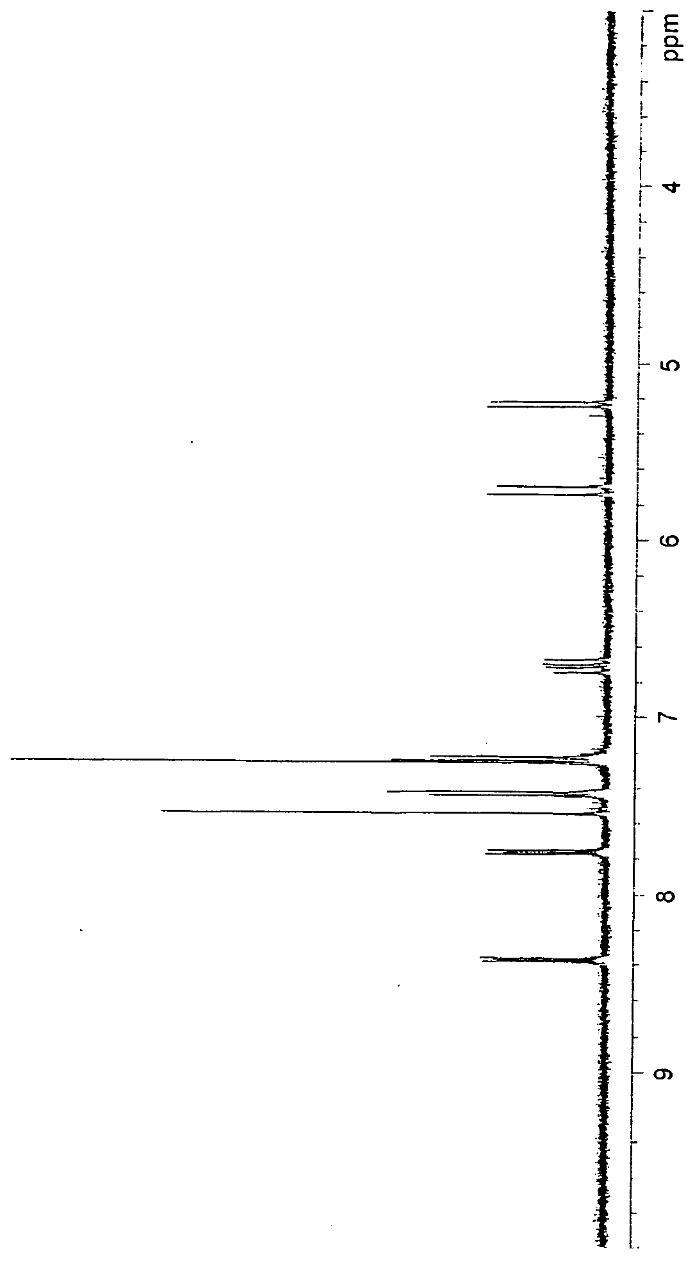


Fig. 2

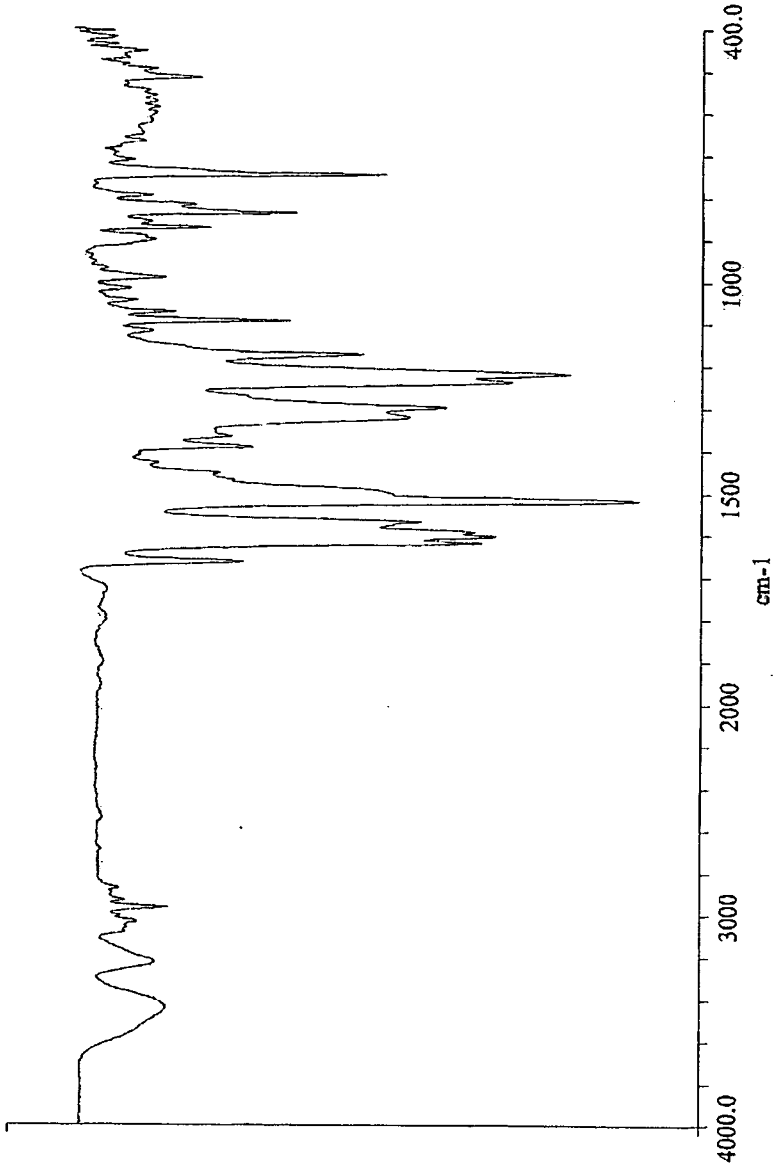


Fig. 3

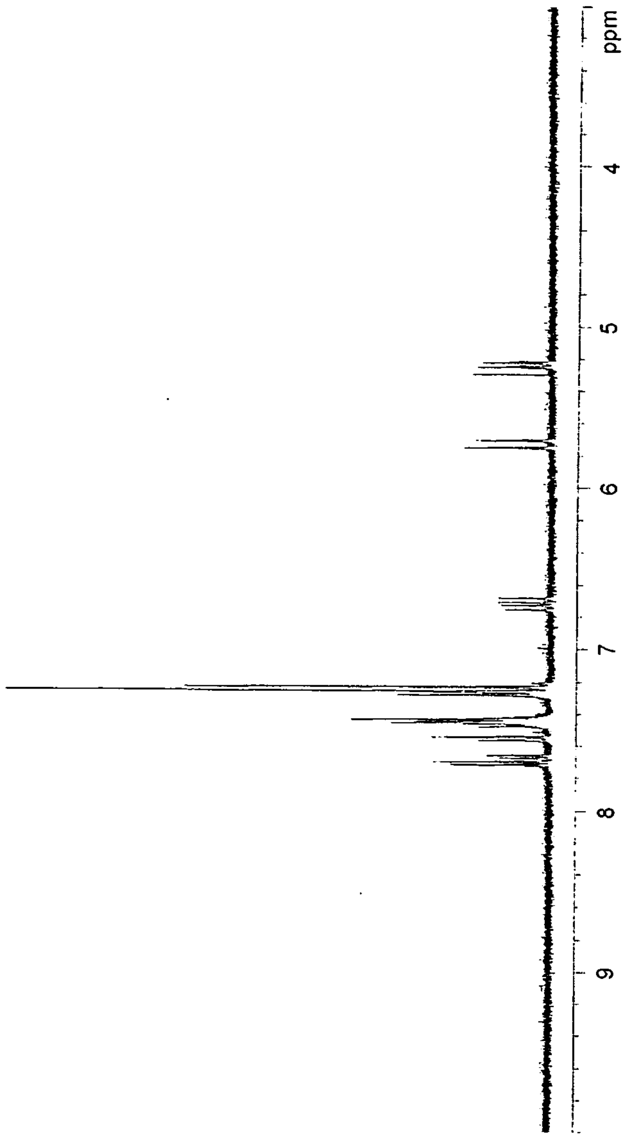


Fig. 4

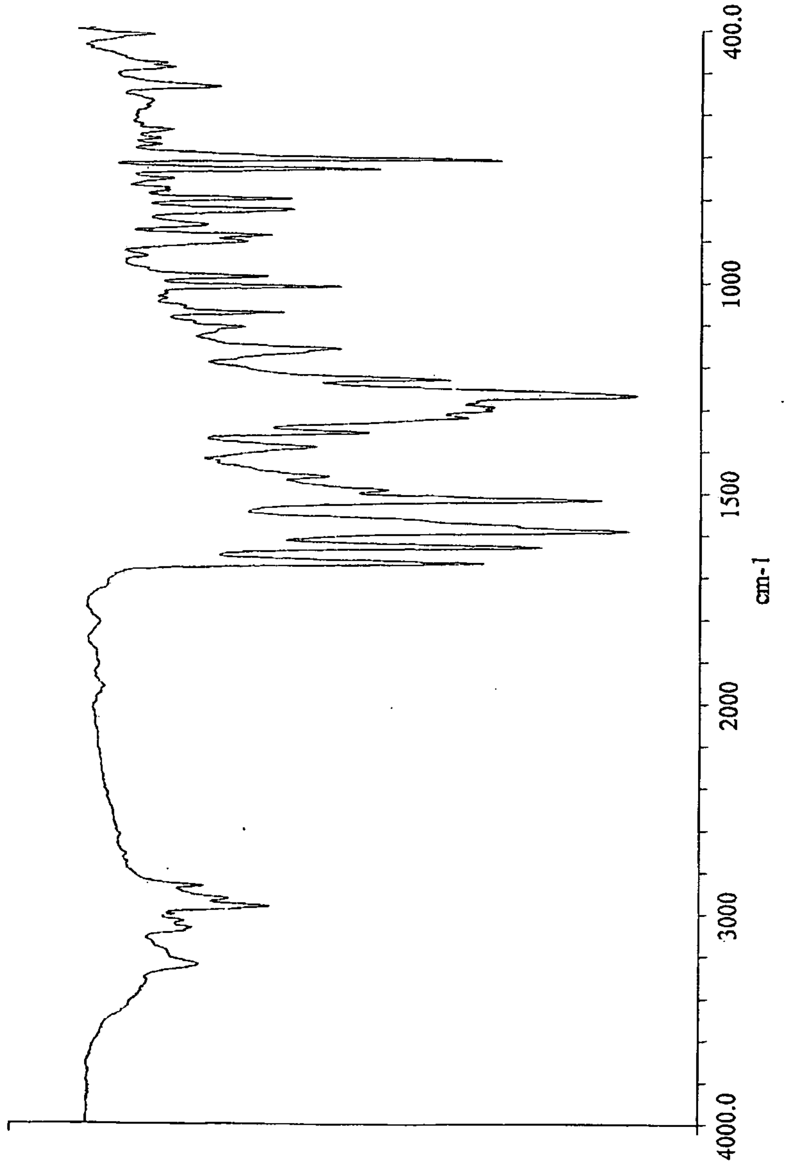


Fig. 5

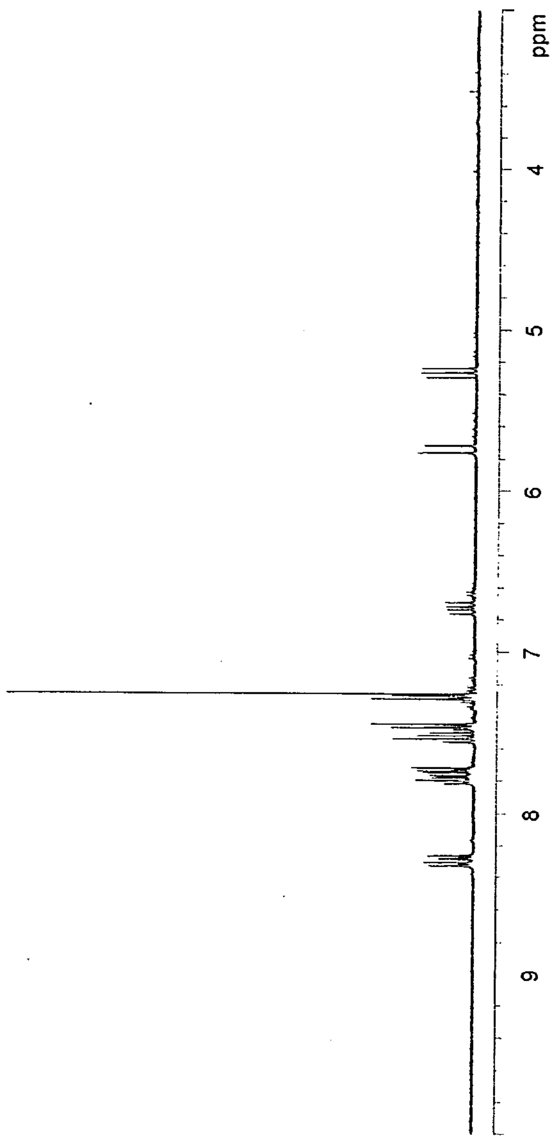


Fig. 6

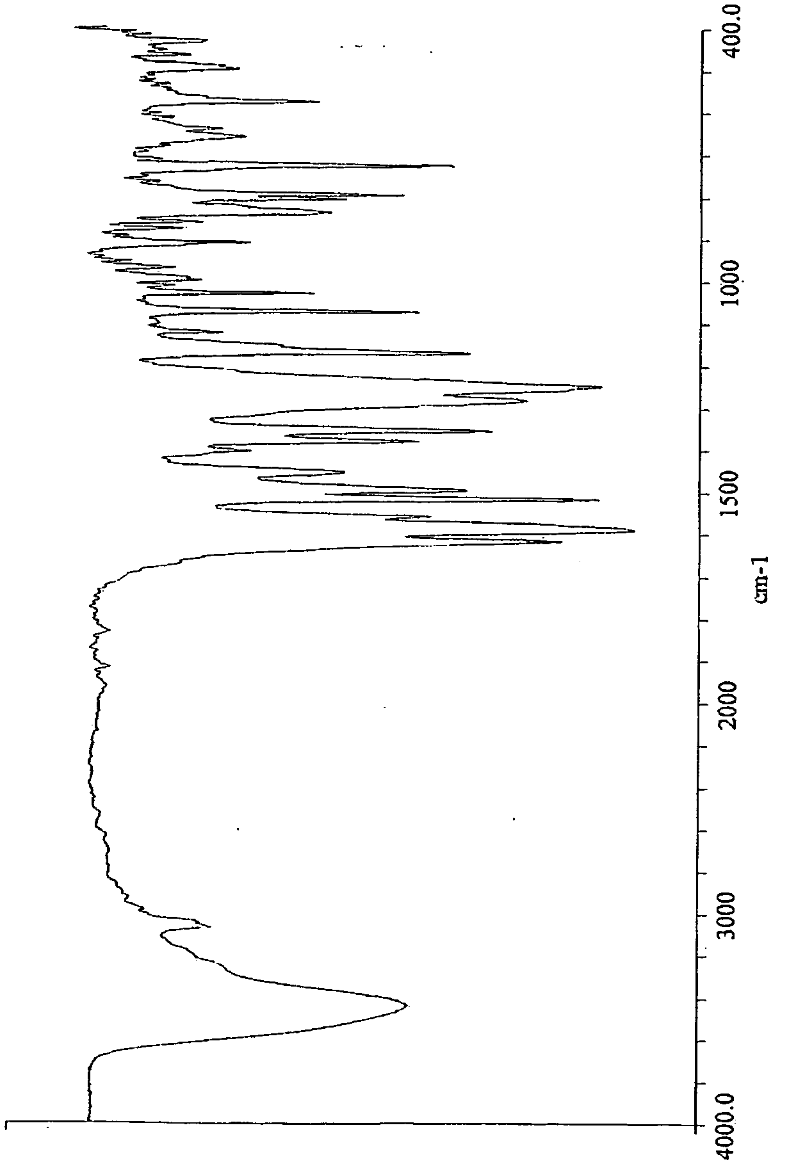


Fig. 7

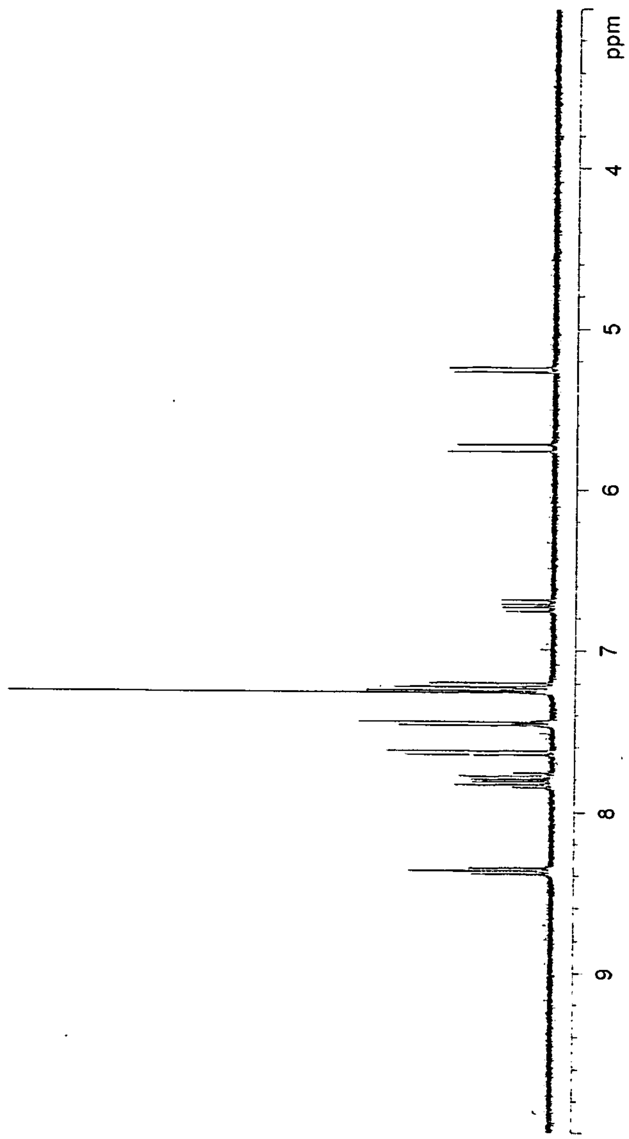


Fig. 8

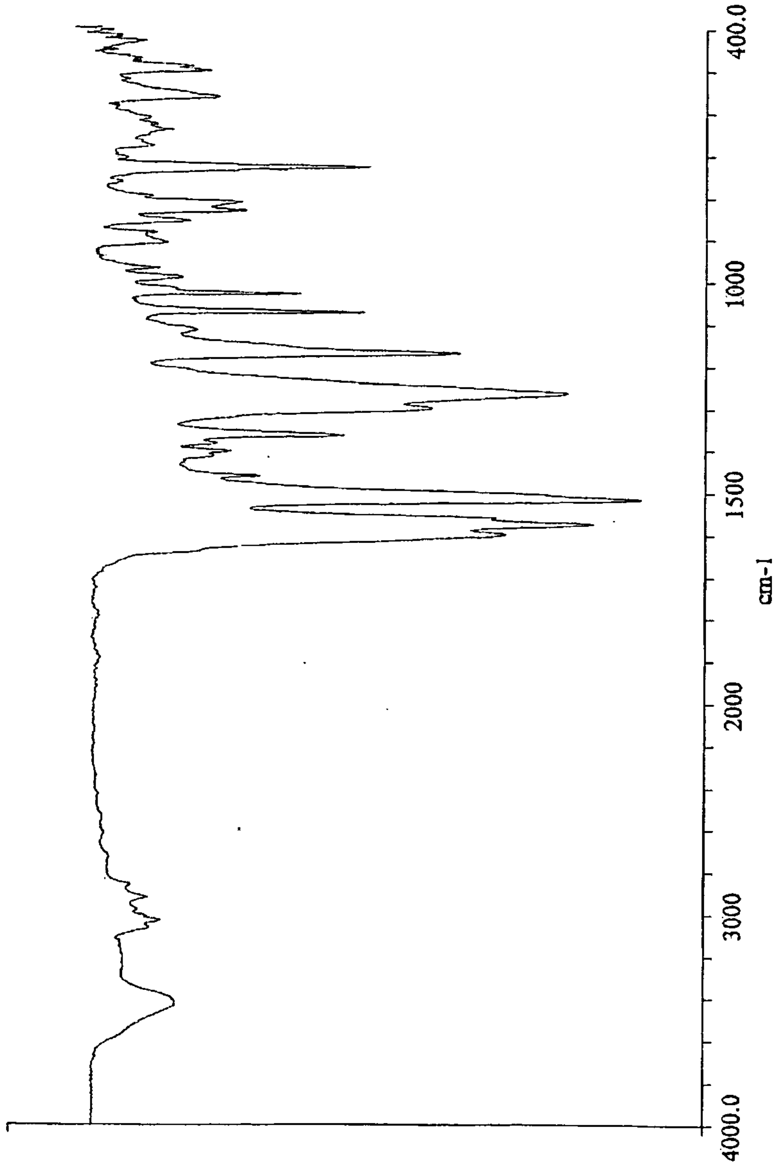


Fig. 9

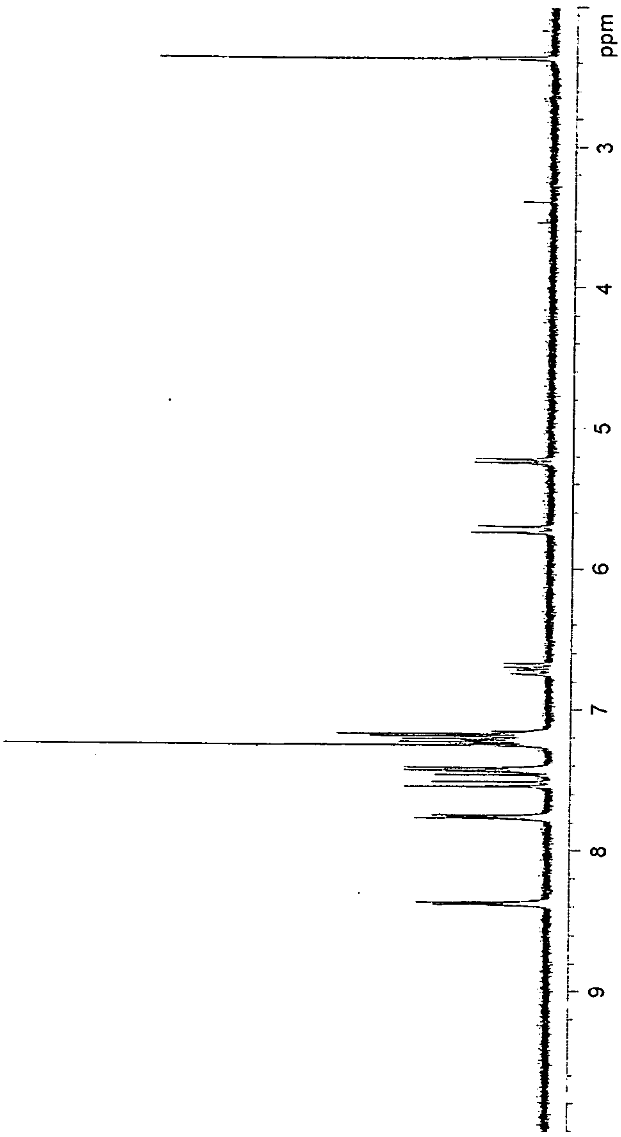


Fig. 10

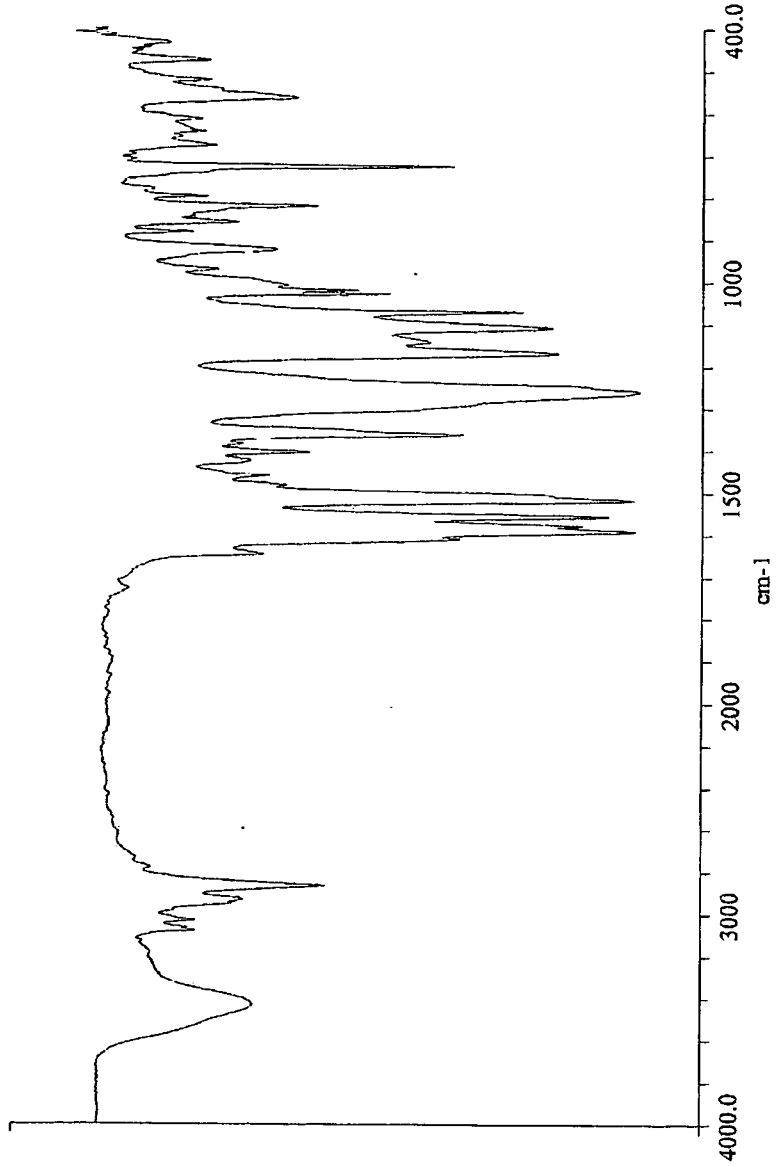


Fig. 11

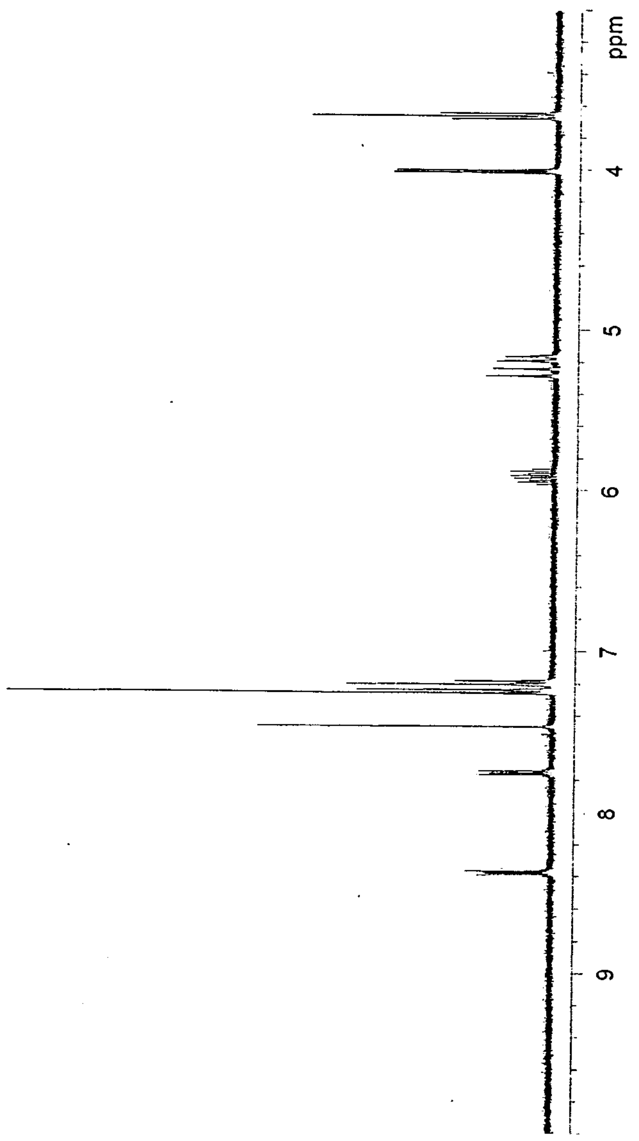


Fig. 12

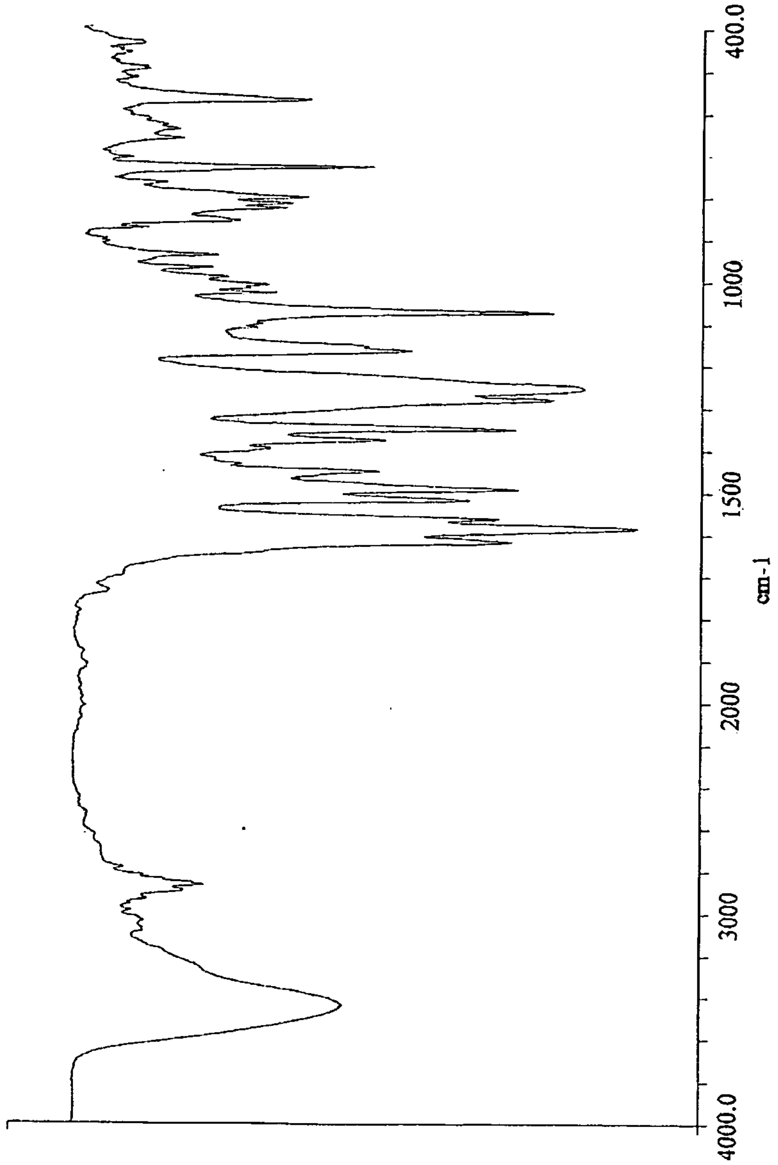


Fig. 13

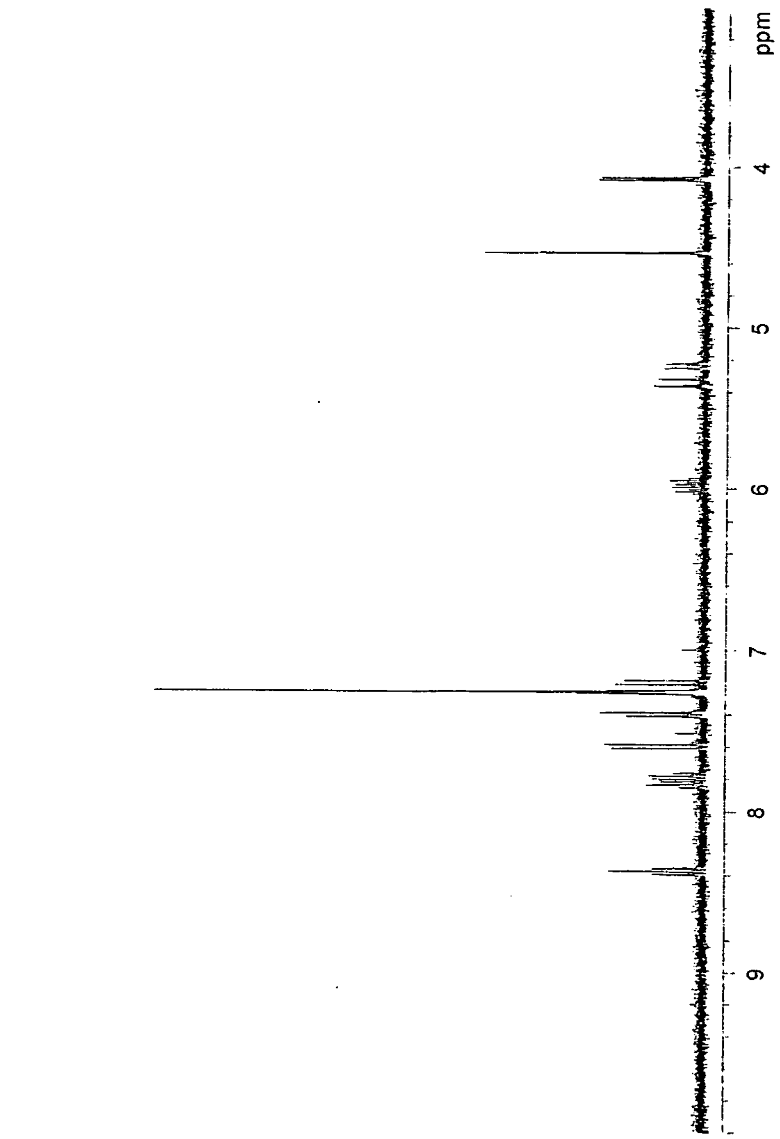


Fig. 14

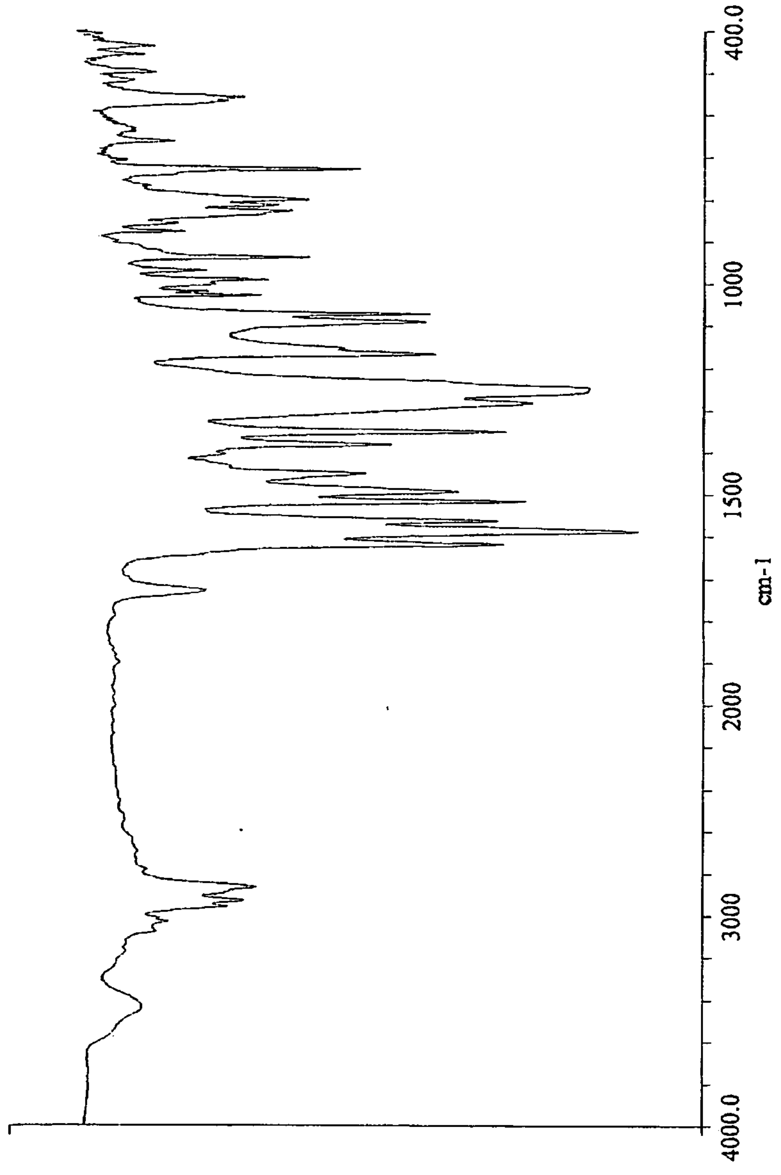


Fig. 15

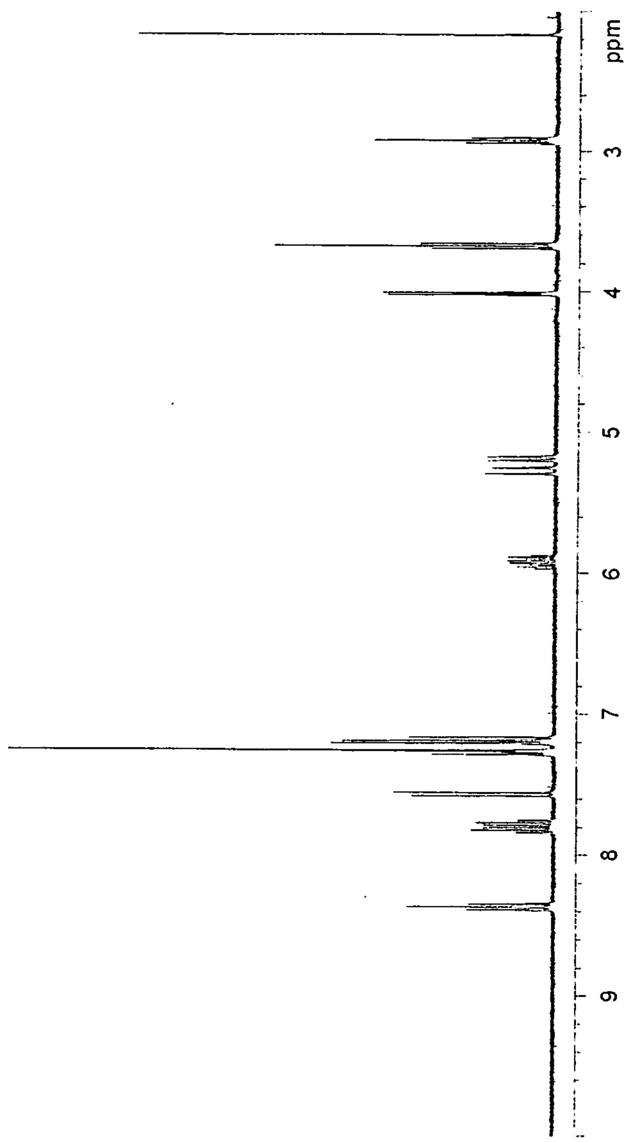


Fig. 16

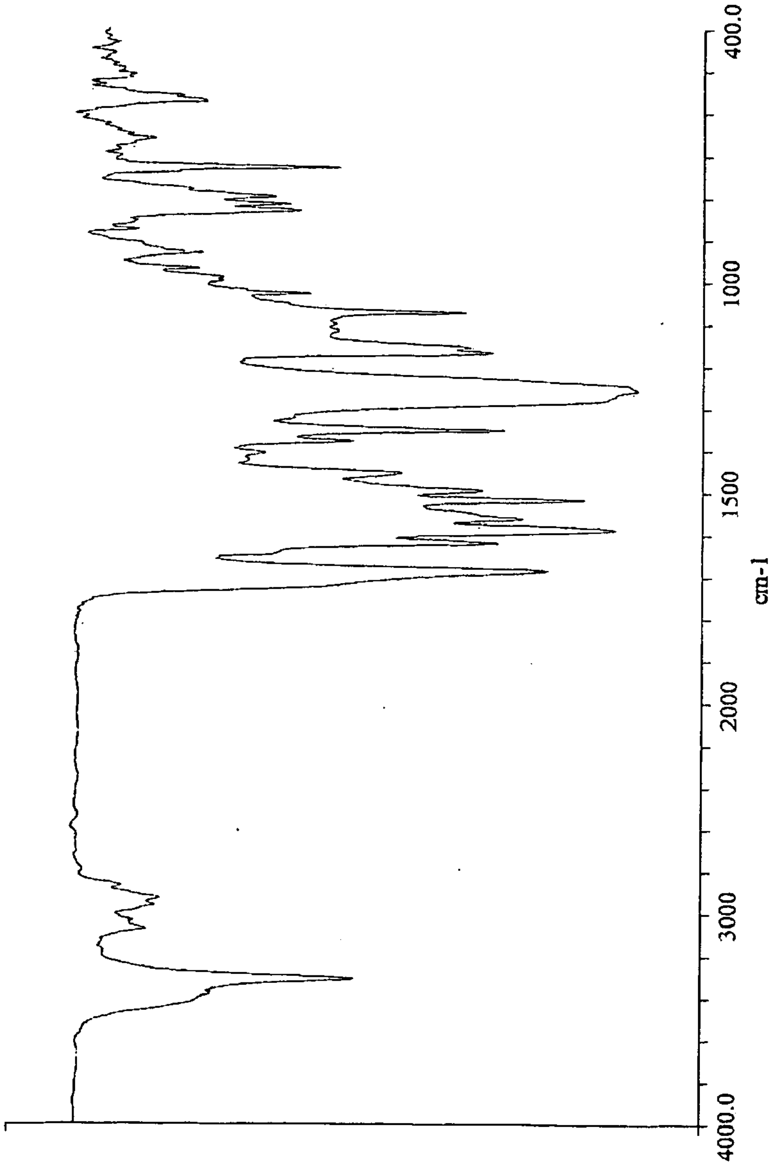


Fig. 17

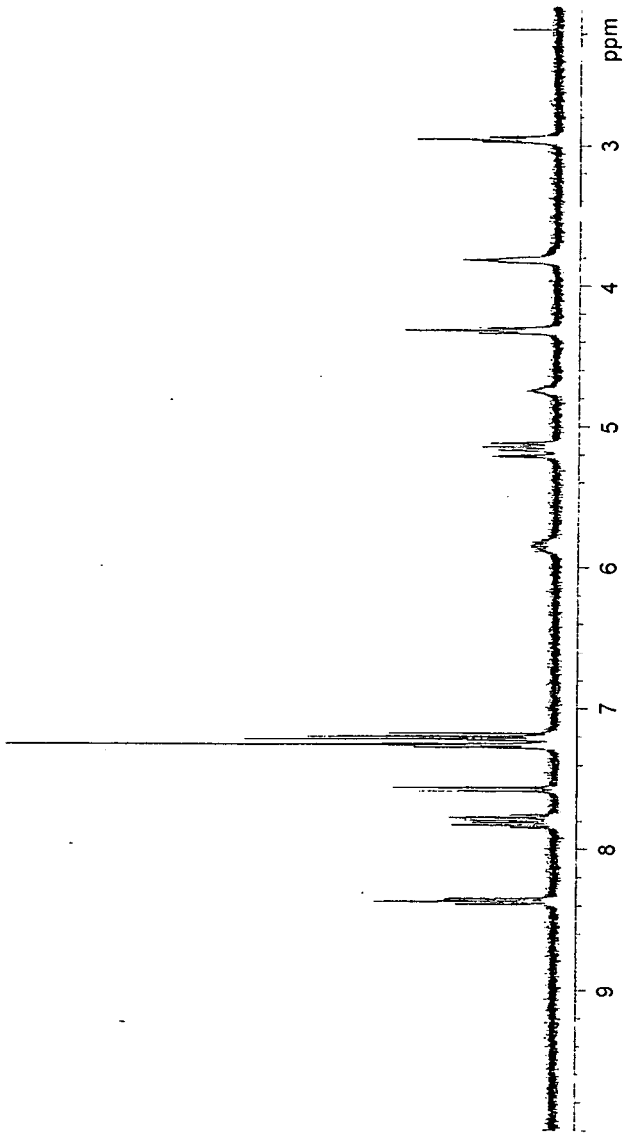


Fig. 18

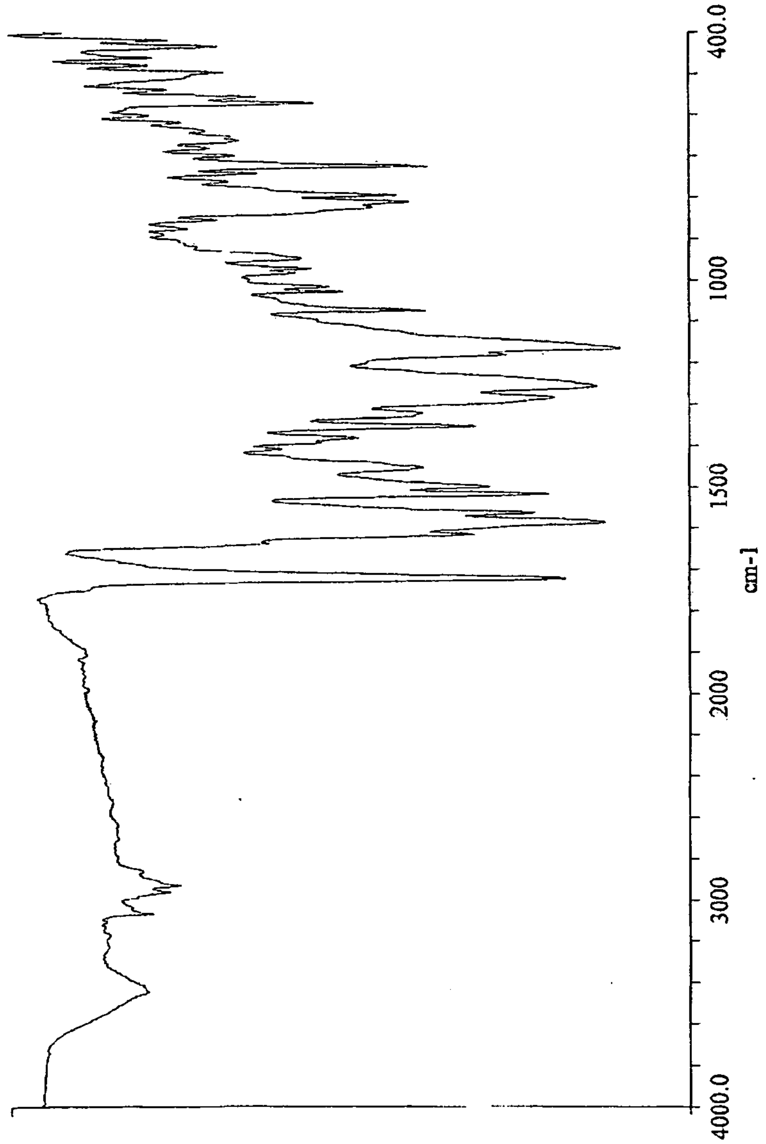


Fig. 19

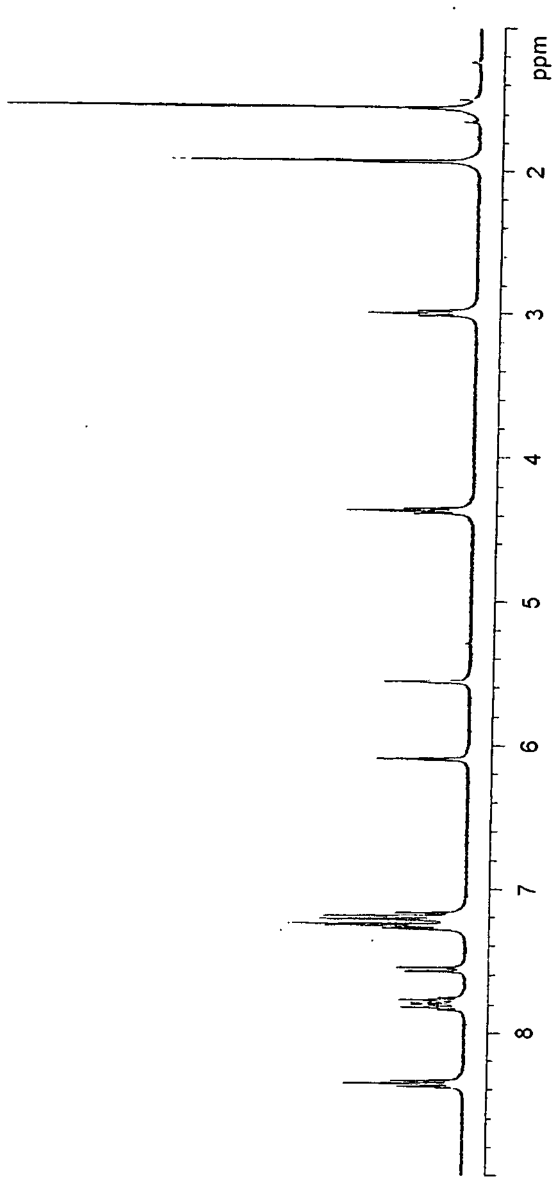


Fig. 20

**INTERNATIONAL SEARCH REPORT**

International application No.
PCT/JP2010/072289

A. CLASSIFICATION OF SUBJECT MATTER
*C09B69/10*(2006.01)i, *C09B1/32*(2006.01)i, *C09B1/514*(2006.01)i, *G02C7/00*(2006.01)i, *G02C7/04*(2006.01)i

According to International Patent Classification (IPC) or to both national classification and IPC

B. FIELDS SEARCHED

Minimum documentation searched (classification system followed by classification symbols)
C09B69/10, C09B1/32, C09B1/514, G02C7/00, G02C7/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 9-272814 A (Hoya Corp.),<br>21 October 1997 (21.10.1997),<br>claims; paragraphs [0001], [0022], [0026];<br>compounds BD-1 to 4; examples<br>& US 5919880 A & EP 799864 A1 | 1-2,4-8,<br>11-15,17-20<br>3,9-10,16 |
| X<br><br>Y | JP 3-072576 A (Bausch & Lomb Inc.),<br>27 March 1991 (27.03.1991),<br>claims; page 2, upper left column, 4th line from the bottom to upper right column, line 6;<br>compound XII; examples 1i, 2<br>& US 5055602 A & US 4997897 A<br>& EP 396376 A1 | 1-2,4-8,<br>11-15,17-20<br>3,9-10,16 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 January, 2011 (06.01.11) | 18 January, 2011 (18.01.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2010/072289

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2009/086444 A1 (JOHNSON & JOHNSON VISION CARE, INC., TORAY INDUSTRIES, INC.), 09 July 2009 (09.07.2009), claims; paragraphs [00132] to [00135]; compounds (i), (r) & US 2009/0171026 A1 | 3,9-10,16 |
| Y | WO 2009/124048 A1 (JOHNSON & JOHNSON VISION CARE, INC.), 08 October 2009 (08.10.2009), claims; formulae IX, X; examples (Family: none) | 3,9-10,16 |
| A | JP 2000-162429 A (Toppan Printing Co., Ltd.), 16 June 2000 (16.06.2000), claims; dye structure no.6, 8, 12, 15, 17 to 22; paragraphs [0120], [0129] & US 6509125 B1 | 1-20 |
| A | JP 2007-503509 A (Eastman Chemical Co.), 22 February 2007 (22.02.2007), claims; example 4 & US 2005/0044644 A1 & US 2006/0282960 A1 & WO 2005/021663 A1 | 1-20 |
| A | JP 2003-201410 A (Eastman Chemical Co.), 18 July 2003 (18.07.2003), claims; paragraph [0002] & US 2003/0134924 A1 & EP 1310527 A2 | 1-20 |
| A | JP 2004-506061 A (Eastman Chemical Co.), 26 February 2004 (26.02.2004), claims; formulae XVI, XVII, XVIII; paragraph [0002] & US 2002/0068725 A1 & US 2004/0102637 A1 & US 2004/0110812 A1 & US 2004/0122072 A1 & US 2004/0142995 A1 & US 2007/0032598 A1 & WO 2002/012400 A2 & WO 2002/012401 A2 | 1-20 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H8194191 B
- JP 2007505171 PCT
- JP 2003084242 A
- WO 2005116728 PCT
- WO 2004063795 PCT